# EUROPÄISCHE PATENTANMELDUNG

(11) **EP 4 622 031 A1**
(43) Veröffentlichungstag der Anmeldung: **24.09.2025**
(21) Anmeldenummer: 25158405.8
(22) Anmeldetag: 17.02.2025
(51) Int. Cl.: H02H 1/00, H02H 7/22, H02H 7/26

(54) **STÖRLICHTBOGENSCHUTZSYSTEM**

(30) Priorität: 20.02.2024 DE 102024104681
(71) Anmelder: DEHN SE, 92318 Neumarkt i.d. OPf. (DE)
(72) Erfinder: Schumacher, Andreas, 92318 Neumarkt i.d.OPf. (DE); Staudigl, Christian, 92318 Neumarkt i.d.OPf. (DE); Gottschalk, Thomas, 92318 Neumarkt i.d.OPf. (DE); Dietweger, Stefan, 92318 Neumarkt i.d.OPf. (DE)
(74) Vertreter: Prinz & Partner mbB

(57) **Zusammenfassung**

Es ist ein Störlichtbogenschutzsystem (10) für eine Schaltanlage (12) beschrieben. Das Störlichtbogenschutzsystem (10) weist einen Sensor (14), ein Sensormodul (16) und ein Zentralgerät (18) auf. Der Sensor (14) ist dazu eingerichtet, einen störlichtbogenrelevanten Parameter zu erfassen und ein Sensorsignal zu erzeugen und an das Sensormodul (16) weiterzuleiten. Das Sensormodul (16) ist dazu eingerichtet, das Sensorsignal zu empfangen und zu verarbeiten, um ein verarbeitetes Sensorsignal zu erhalten. Das Sensormodul (16) ist ferner dazu eingerichtet, das verarbeitete Sensorsignal an das Zentralgerät (18) weiterzuleiten. Das Zentralgerät (18) ist dazu eingerichtet, das verarbeitete Sensorsignal auszuwerten. Der Sensor (14) ist mit dem Sensormodul (16) über eine Bus-Verbindung (23) informationsaustauschend verbunden und das Sensormodul (16) ist mit dem Zentralgerät (18) über eine Bus-Verbindung (22) informationsaustauschend verbunden.

## Beschreibung

Die vorliegende Erfindung betrifft ein Störlichtbogenschutzsystem für eine Schaltanlage sowie ein Verfahren zum Detektieren eines Störlichtbogenereignisses mit einem Störlichtbogenschutzsystem.

Bei technischen Defekten, Fehlhandlungen, falscher Installation oder Oberflächenverschmutzung innerhalb einer Schaltanlage kann es zu einem ungewollten Spannungsüberschlag kommen, in dessen Verlauf ein Störlichtbogen entsteht. Ein solcher Störlichtbogen, auch Fehlerlichtbogen genannt, ist ein technisch unerwünschter Lichtbogen zwischen elektrischen Anlagenteilen einer Schaltanlage, der durch eine elektrische Gasentladung zwischen zwei Elektroden entsteht.

Ein Störlichtbogen kann innerhalb kürzester Zeit große Mengen an Energie freisetzen, sodass von dem Störlichtbogen eine hohe thermische Belastung für die unmittelbare Umgebung ausgeht. Vor allem im Niederspannungsbereich führt ein Störlichtbogen daher zu massiven Schäden, insbesondere Brandschäden an der Schaltanlage und deren Umgebung.

Je länger ein Störlichtbogen im Rahmen eines Störlichtbogenereignisses vorliegt, desto größer sind die Schäden an der Schaltanlage und der Umgebung. Daher werden in Schaltanlagen unter anderem Störlichtbogenschutzsysteme eingebaut, die das Ausbreiten eines Störlichtbogens verhindern und den Störlichtbogen möglichst schnell löschen sollen.

Die Störlichtbogenschutzsysteme weisen typischerweise mehrere Störlichtbogenschutzkomponenten auf, die dafür sorgen, dass ein Störlichtbogen möglichst schnell erkannt und gelöscht wird. Die einzelnen Komponenten müssen dafür miteinander verbunden werden, wobei üblicherweise jede Komponente über eine separate Verbindung mit einem Zentralgerät verbunden wird. Dazu werden Netzwerkleitungen oder Einzeladerverbindungen verwendet, mit denen ein schneller Informationsaustausch zwischen den einzelnen Komponenten des Störlichtbogenschutzsystems gewährleistet werden kann und so ein auftretender Störlichtbogen möglichst schnell erkannt und gelöscht werden kann.

Diese Art der Verdrahtung ist jedoch nicht nur mit einem hohen Materialeinsatz verbunden, sondern führt auch zu einem sehr hohen Montageaufwand des Störlichtbogenschutzsystems und ist darüber hinaus fehleranfällig. Dies führt wiederum zu hohen Herstellungs- und Montagekosten.

Zusätzlich erhöht sich die Komplexität des Störlichtbogenschutzsystems bei vielen Komponenten deutlich, da die einzelnen Komponenten über eine Vielzahl von einzelnen Leitungen mit dem Zentralgerät verbunden werden müssen. Hierdurch ergibt sich ein entsprechend hoher Montageaufwand, der hohe Kosten zur Folge hat.

Die Verbindung der einzelnen Komponenten erfolgt zudem typischerweise über weite Strecken, wobei die Leitungen beispielsweise auch um Ecken, Kanten oder Türscharniere geführt werden müssen. Ecken, Kanten und Türscharniere erschweren jedoch die Verdrahtung. Zudem wird die Verbindung hierdurch stark beansprucht, was zu Beschädigungen an der Leitung führen kann, die im schlimmsten Fall einen Defekt des Störlichtbogenschutzsystems und eine entsprechende Reparatur zur Folge haben können, was mit einer Ausfallzeit der Schaltanlage einhergehen würde.

Darüber hinaus werden Schaltanlagen mit entsprechenden Störlichtbogenschutzsystemen üblicherweise abschnitts- oder feldweise montiert, wobei die einzelnen Felder über eine Vielzahl von Leitungen aufwendig miteinander verbunden werden müssen. Das finale Aufstellen der Schaltanlage und Installieren des Störlichtbogenschutzsystems ist daher mit einem hohen Montageaufwand verbunden.

Die Aufgabe der vorliegenden Erfindung ist es, ein Störlichtbogenschutzsystem bereitzustellen, dass die aus dem Stand der Technik bekannten Nachteile überwindet und den Planungs- und Montageaufwand reduziert.

Die Aufgabe wird erfindungsgemäß unter anderem gelöst durch ein Störlichtbogenschutzsystem für eine Schaltanlage, wobei das Störlichtbogenschutzsystem einen Sensor, ein Sensormodul und ein Zentralgerät aufweist. Der Sensor ist dazu eingerichtet, einen störlichtbogenrelevanten Parameter zu erfassen und ein Sensorsignal zu erzeugen und an das Sensormodul weiterzuleiten. Das Sensormodul ist dazu eingerichtet, das Sensorsignal zu empfangen und zu verarbeiten, um ein verarbeitetes Sensorsignal zu erhalten. Das Sensormodul ist ferner dazu eingerichtet, das verarbeitete Sensorsignal an das Zentralgerät weiterzuleiten. Das Zentralgerät ist dazu eingerichtet, das verarbeitete Sensorsignal auszuwerten. Der Sensor ist mit dem Sensormodul über eine Bus-Verbindung informationsaustauschend verbunden, und das Sensormodul ist mit dem Zentralgerät über eine Bus-Verbindung informationsaustauschend verbunden.

Der Grundgedanke der Erfindung ist es, dass der Sensor, das Sensormodul und das Zentralgerät eine Reihenschaltung ausbilden, wobei die Komponenten, also der Sensor, das Sensormodul und das Zentralgerät, über Bus-Verbindungen informationsaustauschend miteinander verbunden sind. Insbesondere liegt also eine Bus-Verbindung zwischen dem Sensormodul und dem Zentralgerät vor, welche auch als zentrale Bus-Verbindung bezeichnet werden kann, sowie eine Bus-Verbindung zwischen dem Sensor und dem Sensormodul, welche auch als abgezweigte Bus-Verbindung bezeichnet werden kann. Damit kann ein störlichtbogenrelevanter Parameter, der vom Sensor erfasst und von diesem in ein Sensorsignal umgewandelt wird, in Echtzeit an das Sensormodul und vom Sensormodul weiter an das Zentralgerät übermittelt werden. Aufgrund der Bus-Verbindungen zwischen dem Sensor, dem Sensormodul und dem Zentralgerät verringert sich zudem der Montageaufwand, da diese Komponenten in Reihe geschaltet werden können. Dieser Vorteil wird noch größer, sofern das Störlichtbogensystem mehrere Sensormodule und/oder mehrere Sensoren aufweist.

Die mehreren Sensormodule sind in Reihe an der zentralen Bus-Verbindung angeschlossen, an der auch das Zentralgerät angeschlossen ist.

Es können grundsätzliche mehrere Sensoren an einem Sensormodul angebunden sein, wobei dies über eine Bus-Verbindung erfolgt, nämlich die abgezweigte Bus-Verbindung. Die mehreren Sensoren, die an dem gleichen Sensormodul angeschlossen sind, sind ebenfalls in Reihe geschaltet.

Unter einem störlichtbogenrelevanten Parameter ist ein Parameter zu verstehen, der während eines Störlichtbogenereignisses auftritt. Mögliche störlichtbogenrelevante Parameter sind Licht, Strom, Temperatur und Druck, da bei einem Störlichtbogen eine gesteigerte Lichtintensität, ein sehr hoher Stromfluss, eine erhöhte Temperatur und eine starke Druckwelle als Begleiterscheinungen auftreten.

Die in dem Störlichtbogenschutzsystem eingebauten Sensoren sind in der Lage, mindestens einen dieser störlichtbogenrelevanten Parameter zu erfassen und ein Sensorsignal zu erzeugen.

Unter einer Bus-Verbindung ("Binary Unit System-Verbindung") ist eine Verbindung zwischen zwei Komponenten des Störlichtbogenschutzsystems zu verstehen, insbesondere eine drahtgebundene Verbindung, sodass ein einheitlicher Austausch von Daten innerhalb des Störlichtbogenschutzsystems möglich ist. Die Bus-Verbindung hat den Vorteil, dass verschiedene Komponenten des Störlichtbogenschutzsystems in Reihe geschaltet werden können und das Signal über die Bus-Verbindung, insbesondere über einzelne, in Reihe geschaltete Komponenten, zum Zentralgerät gesendet werden kann.

Hierbei kann die zentrale Bus-Verbindung vorgesehen sein, in die das Zentralgerät eingebunden ist und an der das zumindest eine Sensormodul angeschlossen ist. Vom Sensormodul kann dann eine abgezweigte Bus-Verbindung abgehen, an der der zumindest eine Sensor angeschlossen ist, insbesondere mehrere Sensoren in Reihe. Insofern ergibt sich eine Reihenschaltung vom Zentralgerät über die zentrale Bus-Verbindung, über das Sensormodul, über die abgezweigte Bus-Verbindung zum Sensor.

Durch die Reihenschaltung, insbesondere der zentralen Bus-Verbindung und der jeweiligen abgezweigten Bus-Verbindung, verringert sich grundsätzlich der Verdrahtungsaufwand zwischen den einzelnen Komponenten des Störlichtbogenschutzsystems deutlich.

Alle im Störlichtbogenschutzsystem verbauten Bus-Verbindungen können einen M8- und/oder M12-Stecker aufweisen und sind mit den entsprechenden Störlichtbogenschutzsystemkomponenten über eine M8- bzw. M12-Steckverbindung und/oder Schraubverbindung verbindbar.

Insbesondere ist die Bus-Verbindung eine CAN-Bus-Verbindung, also eine Controller Area Network-Verbindung.

Über die Bus-Verbindung ist allgemein ein (serieller) Datenaustausch zwischen den verschiedenen Komponenten des Störlichtbogenschutzsystems möglich.

Bei der Datenübertragung mittels der Bus-Verbindung wird der Inhalt eines Signals durch eine eindeutige Kennzeichnung gekennzeichnet, beispielsweise in Form einer Kennzeichnungsnummer. Neben der Inhaltskennzeichnung kann die Kennzeichnung auch die Priorität des Signals festlegen.

Die Bus-Verbindung hat grundsätzlich den Vorteil, dass sie eine hohe Störsicherheit aufweist. Zudem ist sie kostengünstig zu realisieren und echtzeitfähig, sodass das beim Auftreten eines Störlichtbogenereignisses erzeugte Sensorsignal in Echtzeit über das Sensormodul an das Zentralgerät gesendet werden kann. Die maximale Übertragungsdauer von Signalen liegt beispielsweise bei 0,5 ms. Dies ist besonders wichtig, um das tatsächliche Auftreten eines Störlichtbogens schnell zu erkennen. Dies erfolgt durch Auswertung des übermittelten Signals innerhalb des Zentralgeräts. Ferner kann der Störlichtbogen so schnell gelöscht werden, beispielsweise mithilfe eines Löschgeräts.

Bei der Bus-Verbindung kann das Sensormodul über einen Mehr-Draht Bus, beispielsweise einen 2-Draht Bus, mit zusätzlicher Masseleitung mit dem Zentralgerät verbunden sein.

Die Bus-Verbindung kann grundsätzlich auch über ein paralleles Bus-System realisiert sein, sodass mehrere Signale gleichzeitig übertragbar sind.

Das Sensorsignal ist ein solches Signal, das über eine Bus-Verbindung übertragen werden kann und eine eindeutige Identifikation aufweist, beispielsweise eine Identifikationsnummer, sodass das Sensormodul und das Zentralgerät erkennen können, woher das Signal stammt, also von welcher Komponente des Störlichtbogenschutzsystems bzw. von welchem Sensor. Dieselbe Identifikation darf daher nicht von zwei Komponenten des Störlichtbogenschutzsystems gleichzeitig verwendet bzw. an diese vergeben werden.

Aufgrund der eindeutigen Identifikation ist es nach einem Störlichtbogenereignis möglich, genau zu detektieren, wo der Störlichtbogen entstanden ist bzw. welcher Sensor das Störlichtbogenereignis detektiert hat. Hierdurch kann schneller und leichter festgestellt werden, was der Auslöser für den Störlichtbogen war.

Es kann so auch nachvollzogen werden, welche Teile des Störlichtbogenschutzsystems und/oder eventuell der Schaltanlage getauscht werden müssen, um die Schaltanlage wieder sicher in Betrieb nehmen zu können. Die Dauer bis zur Wiederinbetriebnahme kann daher deutlich reduziert werden, da eine aufwendige Suche nach dem Ort des Fehlers entfällt.

Das erfindungsgemäße Störlichtbogenschutzsystem ermöglicht somit nicht nur einen einfachen und schnellen Einbau mit einem geringen Verdrahtungsaufwand, sondern auch ein zuverlässiges, schnelles Erkennen eines Störlichtbogens sowie die nachträgliche Lokalisation des Störlichtbogens bzw. des Orts, an dem der Störlichtbogen aufgetreten ist.

Der Sensor und/oder das Sensormodul und/oder das Zentralgerät können bzw. kann (jeweils) neben einem Betriebsmodus, in dem ein potenzieller Störlichtbogen während des Betriebs der Schaltanlage detektiert werden kann auch einen Testmodus aufweisen, in dem die jeweilige Komponente sich selbst oder zumindest eine andere Komponente des Störlichtbogenschutzsystems auf ihre Funktionalität hin überwachen bzw. überprüfen kann. Darüber hinaus kann in dem Testmodus auch die jeweilige Bus-Verbindung auf mögliche Defekte wie einen Leitungsbruch oder eine Störung in der Signalübertragung hin überwacht werden.

Zusätzlich können im Testmodus noch weitere Faktoren des Störlichtbogenschutzsystems überwacht werden, sowie die Temperatur und/oder die Betriebsspannung des Störlichtbogenschutzsystems. Insofern dient der Testmodus zur Funktionalitätsüberwachung des Störlichtbogenschutzsystems.

Grundsätzlich kann über die Bus-Verbindung also eine Ansteuerung der Komponenten des Störlichtbogenschutzsystems, eine Überwachung der Komponenten des Störlichtbogenschutzsystems sowie eine Übertragung des Sensorsignals vom Sensor erfolgen. Mit anderen Worten ist eine bidirektionale Datenübertragung über die Bus-Verbindung möglich. Auch kann die Spannungsversorgung der Komponente des Störlichtbogenschutzsystems über die Bus-Verbindung erfolgen, insbesondere des Sensors über die Bus-Verbindung zum Sensormodul.

Um die Montage und Demontage des Störlichtbogenschutzsystems weiter zu vereinfachen, sind die Komponenten des Störlichtbogenschutzsystems, also das Sensormodul und das Zentralgerät, dazu eingerichtet, an einer Hutschiene montiert zu werden. Auch der Sensor kann gegebenenfalls an einer Hutschiene montiert werden, wobei dies vom verwendeten Sensor abhängt.

Darüber hinaus weisen alle Komponente bzw. elektronischen Erfassungsgeräte ein Gehäuse auf, das aus einem Metall gebildet ist. Mit einem Gehäuse aus einem Metall lässt sich die elektromagnetische Verträglichkeit (EMV) der einzelnen Komponenten des Störlichtbogenschutzsystems mit einfachen Mitteln verbessern.

Das Störlichtbogenschutzsystem ist eingerichtet, einen Störlichtbogen innerhalb von weniger als 75 ms ab dem Erfassen eines störlichtbogenrelevanten Parameters zu löschen. Hierzu kann das Störlichtbogenschutzsystem zumindest einen Leistungsschalter ("circuit breaker" - "CB") aufweisen, also ein elektromechanisches Schaltgerät. Vorzugsweise beträgt diese Löschdauer zwischen dem Erfassen des störlichtbogenrelevanten Parameters weniger als 75 ms, beispielsweise 50 ms.

Gemäß einem Aspekt der Erfindung weist das Störlichtbogenschutzsystem mindestens ein Löschgerät auf, das dazu eingerichtet ist, einen Störlichtbogen zu löschen. Das Löschgerät ist insbesondere zusätzlich zum Leistungsschalter vorgesehen, um die Löschdauer des Störlichtbogenschutzsystems zu verringern. Das Löschgerät kann einen zweiphasigen Anschluss aufweisen, worüber das Löschgerät an ein Sammelschienensystem elektrisch anschließbar ist, insbesondere ein Hauptsammelschienensystem, um hierüber einen Kurzschluss zwischen diesen zwei Phasen herzustellen.

Zur Ansteuerung des Löschgeräts kann das Löschgerät zudem über eine Kommunikationsschnittstelle verfügen, über die das Löschgerät in das Bus-System integriert werden kann. Mit anderen Worten kann das Löschgerät (direkt) mit dem Zentralgerät über die Bus-Verbindung verbunden sein.

Das mindestens eine Löschgerät ist über eine Bus-Verbindung informationsaustauschend mit dem Zentralgerät verbunden, wobei das Zentralgerät dazu eingerichtet ist, mindestens ein Auslösesignal über die Bus-Verbindung an das mindestens eine Löschgerät zu senden. Dementsprechend ist das Löschgerät über die Bus-Verbindung ansteuerbar. Durch die Bus-Verbindung zwischen dem Löschgerät und dem Zentralgerät ist eine Übertragung des Auslösesignals in Echtzeit möglich, sodass der Störlichtbogen sehr schnell gelöscht werden kann. Insbesondere liegt die Löschdauer zwischen dem Erfassen des störlichtbogenrelevanten Parameters und dem Löschen des Störlichtbogens bei weniger als 2 ms.

Die Dauer vom Erfassen eines störlichtbogenrelevanten Parameters bis zum Löschen des Störlichtbogens ist dabei maßgeblich davon abhängig, ob nur ein Leistungsschalter oder ein Leistungsschalter zusammen mit einem Löschgerät vorgesehen ist. In einer Variante des Störlichtbogenschutzsystems ist kein Löschgerät vorgesehen, sondern nur ein Leistungsschalter. In einer anderen Variante des Störlichtbogenschutzsystems ist ein Löschgerät zusätzlich vorgesehen, das über die Bus-Verbindung angesteuert wird und einen gezielten und kontrolliert gesteuerten Kurzschluss innerhalb der Schaltanlage in entsprechend kurzer Zeit verursacht. Die Löschdauer des Löschgeräts selbst beträgt beispielsweise weniger als 1 ms. Das Erzeugen eines Kurzschlusses mittels des Löschgeräts ist demnach deutlich schneller, als das Betätigen eines mechanischen Schalters, sodass mit dem Löschgerät eine kürzere Löschdauer erzielt werden kann, beispielsweise einer Löschdauer des Störlichtbogenschutzsystems von unter 2 ms.

Ferner weist das Löschgerät insbesondere eine Stoßspannungsfestigkeit von 8 kV auf, insbesondere von 12 kV. Das Löschgerät kann eine Bemessungskurzzeitstromfestigkeit von 100 kA für eine Zeitdauer von 1 s, von 110 kA für eine Zeitdauer von 0,3 s und/oder eine Bemessungsstoßstromfestigkeit von 242 kA haben. Ein Stoßstrom liegt üblicherweise für eine Zeitdauer unterhalb von 10 ms vor.

Das Löschgerät ist ferner dazu eingerichtet, seinen Gerätezustand fernverfügbar zu machen, um eine elektrische Verriegelung mit einem Kurzschlussschutzgerät zu ermöglichen. Hierzu kann das Löschgerät einen Fernmeldekontakt bzw. eine Fernmeldeschnittstelle aufweisen.

Darüber hinaus kann das Löschgerät ein Anzeigeelement haben, welches wenigstens eine (farbige) LED aufweisen kann, wobei über das Anzeigeelement ein aktueller Status des Löschgeräts angezeigt werden kann. Bei dem Status kann es sich um einen Betriebszustand des Löschgeräts ("Betriebsbereit" bzw. "Störung"), einen Kommunikationsstatus (der Bus-Verbindung), einen Auslösestatus sowie ein Einbindungsstatus in das Bus-System handeln. Die entsprechenden Status lassen sich durch unterschiedliche Farben realisieren, sodass ein mehrfarbiges Anzeigeelement theoretisch ausreichend wäre. Alternativ können die unterschiedlichen Status durch mehrere (mehrfarbige) LEDs dargestellt werden. Der Betriebszustand des Löschgeräts ("Betriebsbereit" bzw. "Störung") kann durch ein grünes bzw. rotes Licht signalisiert werden. Der Kommunikationsstatus (der Bus-Verbindung) kann in gelber Farbe signalisiert werden. Der Auslösestatus lässt sich durch ein rotes Licht signalisieren. Der Einbindungsstatus in das Bus-System kann über ein blaues Licht signalisiert werden. Das Anzeigeelement ist dabei so angeordnet, dass es von außen auch dann sichtbar ist, wenn das Löschgerät in einer Schaltanlage montiert ist, also bspw. an eine Außenseite der Schaltanlage geführt oder an der Außenseite der Schaltanlage angebracht sein.

Das Löschgerät kann ferner einen Testmodus aufweisen, in dem das Löschgerät und/oder die über das Löschgerät ausgebildete Bus-Verbindung auf mögliche Defekte hin untersucht wird. So kann unter anderem ein Drahtbruch in der Bus-Verbindung gefunden werden.

Darüber hinaus kann das Löschgerät einen Temperaturfühler aufweisen, um die interne Temperatur im Löschgerät zu überwachen. Alternativ oder ergänzend kann eine interne Spannung an Bauteilen des Löschgeräts überwacht werden. Die interne Temperatur und/oder die interne Spannung können bzw. kann zur Überwachung des Betriebszustands des Löschgeräts dienen, insbesondere zur Lebensdauervorhersage. Die entsprechenden Daten können über die Bus-Verbindung übermittelt werden, bspw. an das Zentralgerät.

Das Löschgerät stellt ebenfalls eine Komponente des Störlichtbogenschutzsystems dar.

Über ein Bedienelement am Löschgerät, beispielsweise eine Taste, lässt sich das Löschgerät in das Bus-System einbinden, also mit dem Zentralgerät so verbinden, dass eine Signalübertragung über die Bus-Verbindung sichergestellt ist. Hierdurch ist gewährleistet, dass das Auslösesignal vom Zentralgerät an das Löschgerät gesendet werden kann, also richtig adressiert ist.

Vorteilhafterweise weist das Störlichtbogenschutzsystem mindestens zwei Löschgeräte auf, die vom Zentralgerät ansteuerbar sind, insbesondere gemeinsam. Insbesondere ist ein erstes Löschgerät zwischen einer ersten Phase und einer zweiten Phase angeordnet und ein zweites Löschgerät zwischen der zweiten Phase und der dritten Phase angeordnet.

Gemäß einem weiteren Aspekt der Erfindung ist der Sensor ein Lichtsensor. Der von dem Sensor erfasste störlichtbogenrelevante Parameter ist dementsprechend eine Lichtintensität. Der Sensor ist ein Punktsensor oder ein Liniensensor zum Erfassen von Lichtintensitäten.

Der als Lichtsensor ausgebildete Sensor ist unempfindlich gegenüber Umgebungslicht mit einer Stärke von mindestens 2000 Lux, vorzugsweise von mindestens 5000 Lux, sodass bei einer geöffneten Schaltanlage kein fehlerhaftes Sensorsignal erzeugt wird. Erst ab einer Lichtstärke von im Wesentlichen 8000 Lux wird ein Sensorsignal erzeugt. Der Lichtsensor kann eine Sammellinse aufweisen, um Licht aus einem möglichst großen Winkelbereich einzufangen, mindestens aus einem Winkelbereich von 90°, insbesondere in einem Winkelbereich von 180°.

Ein Liniensensor, der auch faseroptischer Sensor genannt werden kann, weist eine lichtdurchlässige Ummantelung auf, sodass der Liniensensor das vom Störlichtbogen emittierte Licht erfassen kann und überträgt das Licht im Kern des Lichtwellenleiters nahezu verlustfrei bis zu den beiden mit Anschlüssen versehenen Enden. Der Detektionswinkelbereich des Liniensensors beträgt 360°.

Zudem kann das Störlichtbogenschutzsystem einen Stromsensor und ein als Stromsensormodul ausgebildetes Sensormodul aufweisen. Der Stromsensor kann mit dem Stromsensormodul über eine Sensorleitung verbunden sein.

Beispielsweise ist der Stromsensor als eine Rogowskispule ausgebildet. Die Rogowskispule und das Stromsensormodul sind dazu eingerichtet, ab einem Strom, der größer als das Zweifache des Normalstroms ist, ein Signal zu erzeugen.

Das Stromsensormodul ist grundsätzlich in das Bus-System integriert, also über eine Bus-Verbindung mit dem Zentralgerät verbunden, sodass das für den erfassten Stromwert repräsentative Sensorsignal an das Zentralgerät übermittelt wird.

Zur erfolgreichen Sensorsignalübertragung ist jeder Sensor mit einem entsprechenden Sensormodul verbunden. Genauer gesagt ist der wenigstens eine Lichtsensor also mit einem Lichtsensormodul und der wenigstens eine Stromsensor mit einem Stromsensormodul verbunden, sodass die von den Sensoren ausgehenden Sensorsignale von dem jeweiligen Sensormodul entsprechend empfangen und ausgewertet werden können.

Der jeweilige Sensor, insbesondere der Lichtsensor bzw. der Stromsensor, und/oder das jeweilige Sensormodul, insbesondere das Lichtsensormodul bzw. das Stromsensormodul, können bzw. kann mindestens ein Anzeigeelement aufweisen, das eine (farbige) LED und/oder ein Display aufweisen kann, wobei über das Anzeigeelement ein Status des Sensors bzw. des Sensormoduls angezeigt werden kann.

Bei dem Status kann es sich um einen Betriebszustand ("Betriebsbereit" bzw. "Störung"), einen Kommunikationsstatus (der Bus-Verbindung), einen Auslösestatus sowie ein Einbindungsstatus in das Bus-System handeln. Die entsprechenden Status lassen sich durch unterschiedliche Farben realisieren, sodass ein mehrfarbiges Anzeigeelement theoretisch ausreichend wäre. Alternativ können die unterschiedlichen Status durch mehrere (mehrfarbige) LEDs dargestellt werden. Der Betriebszustand ("Betriebsbereit" bzw. "Störung") kann durch ein grünes bzw. rotes Licht signalisiert werden. Der Kommunikationsstatus (der Bus-Verbindung) kann in gelber Farbe signalisiert werden. Der Auslösestatus, also ein erfasstes potenzielles Störlichtbogenereignis, lässt sich durch ein rotes Licht signalisieren. Der Einbindungsstatus in das Bus-System kann über ein blaues Licht signalisiert werden.

Ferner können der Sensor und/oder das Sensormodul ein Bedienelement, beispielsweise in Form einer Taste, aufweisen, über die sich der Sensor mit dem Sensormodul und/oder dem Zentralgerät bzw. das Sensormodul mit dem Zentralgerät so verbinden lassen, dass eine Signalübertragung sichergestellt ist und ein Sensorsignal bzw. ein verarbeitetes Sensorsignal fehlerfrei an das Zentralgerät gesendet werden und dem entsprechenden Sensor und/oder Sensormodul zugeordnet werden kann.

Das Stromsensormodul ist zusätzlich dazu eingerichtet, die Plausibilität der eingehenden Strominformationen zu überwachen, um so einen fehlerhaften Stromsensor und/oder eine fehlerhafte Bus-Verbindung zwischen dem Stromsensor und dem Stromsensormodul festzustellen.

Erfindungsgemäß ist vorgesehen, dass das Störlichtbogenschutzsystem mehrere Sensoren aufweist, die über eine Bus-Verbindung in Reihe geschaltet sind, wobei maximal ein Lichtsensor über eine Bus-Verbindung direkt mit einem Lichtsensormodul verbunden ist. Alle weiteren Sensoren sind in einer Reihe hintereinandergeschaltet. Mit anderen Worten ist somit nur der erste Sensor der Reihe der Sensoren direkt mit dem Sensormodul verbunden, wohingegen die weiteren Sensoren der Reihe der Sensoren indirekt mit dem Sensormodul verbunden sind, nämlich über den ersten Sensor der Reihe der Sensoren. Voraussetzung für eine erfolgreiche Kommunikation innerhalb des Störlichtbogenschutzsystems ist, dass auch jeder der in Reihe geschalteten Sensoren eine eindeutige Identifikation, beispielsweise in Form einer Identifikationsnummer, aufweist, sodass aus dem Sensorsignal eindeutig erschließbar ist, von welchem Lichtsensor das Sensorsignal stammt.

Aufgrund der Bus-Verbindung und der mehreren Sensoren, die in Reihe geschaltet sind, ist es nicht mehr notwendig, dass jeder Sensor einzeln mit dem Sensormodul direkt verbunden werden muss. Eine indirekte Verbindung eines Sensors über einen weiteren Sensor zum Sensormodul ist somit möglich. Damit können der Verdrahtungsaufwand und somit auch der Montageaufwand des gesamten Störlichtbogenschutzsystems deutlich verringert werden.

Werden an einem Sensormodul mehrere Sensoren in Reihe hintereinandergeschaltet, so wird ein fehlerhaftes Anstecken eines Sensors an einen anderen über das Zentralgerät detektiert und eine Fehlermeldung ausgegeben. Somit kann ein fehlerhaftes Verbinden der Sensoren innerhalb des Störlichtbogenschutzsystems verhindert werden.

Insgesamt können bis zu vier Lichtsensoren in Reihe geschaltet werden, die alle direkt und/oder indirekt mit einem einzigen Lichtsensormodul verbunden sind. Darüber hinaus ist es ausreichend, wenn das Sensormodul nur noch einen einzigen Sensormodulanschluss für einen Sensor aufweist, auf weitere gegebenenfalls ungenutzte Sensormodulanschlüsse kann verzichtet werden. Es gibt bei einem eingebauten Lichtsensormodul daher keine ungenutzten Sensormodulanschlüsse. Die Kosten für das Sensormodul können somit gesenkt werden.

Ein Stromsensormodul ist mit bis zu drei Rogowskispulen verbindbar. Das Stromsensormodul weist im Gegensatz zum Lichtsensormodul für jede Rogowskispule einen eigenen Sensoranschluss auf.

Gemäß einem weiteren Aspekt der Erfindung weist das Störlichtbogenschutzsystem mehrere Sensormodule auf, die ebenfalls über eine Bus-Verbindung in Reihe geschaltet sind, nämlich der zentralen Bus-Verbindung. Mit anderen Worten kann ein Sensormodul über ein weiteres Sensormodul indirekt mit dem Zentralgerät über die zentrale Bus-Verbindung verbunden sein. Da jedes Sensormodul eine eindeutige Identifikation aufweist, kann das Zentralgerät rückschließen, von welchem Sensormodul das verarbeitete Sensorsignal stammt. Ein Verbinden jedes Sensormoduls separat mit dem Zentralgerät ist nicht notwendig. Dadurch muss das Zentralgerät nur noch einen einzigen Zentralgeräteanschluss für ein Sensormodul aufweisen. Insgesamt benötigt das Zentralgerät somit nur einen Sensormodulanschluss, über den es mit allen Sensormodulen des Störlichtbogenschutzsystems verbunden ist. Insofern wäre das Zentralgerät unabhängig von der Anzahl der Sensormodule mit maximal einem Sensormodulanschluss versehen.

Es kann jedoch auch vorgesehen sein, dass zumindest ein Zentralgeräteanschluss für ein Lichtsensormodul und einen Sensoranschluss für ein Stromsensormodul aufweist, also zwei Sensormodulanschlüsse. Anders ausgedrückt, ist das Zentralgerät unabhängig von der Anzahl der Sensormodule mit maximal einem Stromsensormodul und maximal einem Lichtsensormodul direkt verbunden, mit allen weiteren Sensormodulen des Störlichtbogenschutzsystems ist das Zentralgerät indirekt verbunden.

Vorteilhafterweise weist das Zentralgerät einen Spannungsanschluss auf, über den das Zentralgerät versorgt werden kann, also mit Spannung. Das Zentralgerät ist zudem dazu eingerichtet, das Sensormodul und den Sensor über die bereits zum Informationsaustausch genutzte und bestehende Bus-Verbindung mit Spannung zu versorgen. Die Bus-Verbindung kann als eine M8- oder M12-Bus-24V-Verbindung ausgebildet sein. Mit anderen Worten benötigen zumindest der Sensor und auch das Sensormodul keinen eigenen Spannungsanschluss, da sie über die Bus-Verbindung fremdversorgt sind. Dadurch kann der Montageaufwand weiter verringert werden.

Es ist selbstverständlich auch möglich, dass auch das Löschgerät über die bestehende Bus-Verbindung fremdversorgt wird.

In dem erfindungsgemäßen Störlichtbogenschutzsystem kann ein Speicher vorgesehen sein, der dazu eingerichtet ist, systemrelevante Informationen, insbesondere Sensorsignale und/oder Auslösesignale, zu speichern. In dem Speicher können ebenfalls verarbeitete Sensorsignale gespeichert werden. Die in dem Speicher gespeicherten system relevanten Informationen werden mit einem Zeitstempel versehen, sodass die Zeit, zu der beispielsweise ein Sensorsignal und/oder ein Auslösesignal erzeugt wurde, zusammen mit dem jeweiligen Ereignis gespeichert wird. Darüber hinaus können in dem Speicher auch verschiedene Zustände des gesamten Störlichtbogenschutzsystems und/oder einzelner Komponenten des Störlichtbogenschutzsystems gespeichert werden. Die in dem Speicher gespeicherten systemrelevanten Informationen dienen auch dazu, nach einem Störlichtbogenereignis den Störlichtbogen in der Schaltanlage anhand der Signale genau zu lokalisieren.

Der Speicher kann lokal im Störlichtbogenschutzsystem vorgesehen sein, beispielsweise als integraler Bestandteil des Zentralgeräts.

Alternativ oder ergänzend kann der Speicher zumindest teilweise als externer Speicher, beispielsweise in Form eines Cloud-Speichers, ausgebildet sein. Hierzu kann das Zentralgerät eine Kommunikationsschnittstelle aufweisen, über die das Zentralgerät unter anderem Daten bereitstellen kann, die in dem externen Speicher gespeichert werden können. Hierdurch ist es unter anderem möglich, dass die Daten auch von extern zugänglich sind, insbesondere über eine gesicherte Verbindung, beispielsweise ein VPN-Tunnel. Ebenso kann die Kommunikation zwischen dem Zentralgerät und dem externen Speicher über eine solche gesicherte Verbindung erfolgen, beispielsweise über einen VPN-Tunnel. Hierzu können Kommunikationssicherheitsmaßnahmen vorgesehen sein, die die Kommunikation absichert. Bei einer Kommunikation mit einem externen Speicher muss insbesondere sichergestellt sein, dass nicht von außerhalb durch einem (ungewollten) Dritten auf das Störlichtbogenschutzsystem zugegriffen werden kann. Dadurch soll das Störlichtbogenschutzsystem vor einem externen Angriff durch Dritte geschützt werden. Die Verbindung kann eine unidirektionale Verbindung sein, sodass nur Daten vom Zentralgerät an den externen Speicher übermittelt werden, aber ein Zugriff von außen auf das Zentralgerät technisch nicht möglich ist. Mit anderen Worten erfolgt eine Datenübertragung nur in eine Richtung, nämlich in Richtung vom Zentralgerät zum externen Speicher.

Das Ausgeben der in dem Speicher gespeicherten systemrelevanten Informationen kann über ein extern an den Speicher angeschlossenes Eingabe- und Anzeigegerät erfolgen, beispielsweise ein Computer. Die gespeicherten systemrelevanten Informationen können zusätzlich auch über eine Anzeigeeinheit ausgegeben werden. Die Anzeigeeinheit ist insbesondere in einer Tür der Schaltanlage verbaut, sodass über die Anzeigeeinheit von außerhalb der Schaltanlage der Modus der einzelnen Störlichtbogenschutzkomponenten, sowie der aktuelle Modus des Störlichtbogenschutzsystems und/oder die systemrelevanten Informationen erkennbar und ablesbar sind.

Das Störlichtbogenschutzsystem kann zusätzlich zumindest ein Relaismodul aufweisen, das mit dem Zentralgerät über eine Bus-Verbindung (direkt) verbunden ist, wobei das Zentralgerät das Relaismodul ansteuern kann. Der Leistungsschalter ist beispielsweise mit dem Relaismodul (direkt) verbunden, sodass das Relaismodul den Leistungsschalter (direkt) ansteuert. Das Relaismodul kann auch Teil des Zentralgeräts sein, also im Zentralgerät integriert sein. In dem Fall kann der Leistungsschalter beispielsweise mit dem Löschgerät direkt verbunden sein, sodass der Leistungsschalter über das Löschgerät angesteuert wird. Eine weitere Ausführungsform sieht vor, dass der Leistungsschalter direkt vom Zentralgerät angesteuert wird.

Das Relaismodul verfügt beispielsweise über mindestens einen Schließerkontakt und mindestens einen Wechslerkontakt. Mit dem Schließerkontakt kann der Arbeitsstromauslöser des einspeisenden Leistungsschalters (direkt) angesteuert werden. Dazu sendet das Zentralgerät ein Auslösesignal an das Relaismodul, das daraufhin, den Leistungsschalter ansteuert.

Der Wechslerkontakt kann mit einer Anzeige verbunden sein, insbesondere mit Signalleuchten, um den Status bzw. Zustand des Störlichtbogenschutzsystems anzuzeigen, beispielsweise "Störlichtbogenschutzsystem in Ordnung" oder "Störung im Störlichtbogenschutzsystem". Über den Wechslerkontakt kann die Anzeige entsprechend angesteuert werden.

Das Relaismodul kann, wie die anderen Komponenten des Störlichtbogenschutzsystems auch, an einer Hutschiene montiert werden, verfügt über ein Bedienelement, beispielsweise in Form einer Taste, und ein Anzeigeelement, beispielsweise eine LED oder ein Display. Das Relaismodul kann einen separaten 24 V Spannungsanschluss aufweisen, worüber das Relaismoduls anstelle des Zentralgeräts mit einer Spannungsquelle verbunden ist, um die Spannungsversorgung des gesamten Störlichtbogenschutzsystems über das Bus-System zu gewährleisten.

Darüber hinaus kann das Störlichtbogenschutzsystem zusätzlich um Stromwandler zum Umwandeln eines großen elektrischen Stroms in ein leicht zu verarbeitendes und über eine Bus-Verbindung übertragbares elektrisches Signal, sowie Temperaturmodule zum Messen der Temperatur innerhalb und außerhalb der Schaltanlage erweitert werden.

Die Erfindung sieht ferner ein System vor, das eine Schaltanlage und ein Störlichtbogenschutzsystem der zuvor genannten Art umfasst. Das Störlichtbogenschutzsystem ist modular aufgebaut. Das System weist mindestens ein Schaltfeld mit einem Zentralgerät, einem Sensor und einem Sensormodul und mindestens ein Anschlussfeld auf. Jedes Anschlussfeld weist mindestens einen Sensor und mindestens ein Sensormodul auf. Das Schaltfeld und das mindestens eine Anschlussfeld sind Teil der Schaltanlage, die mit dem Störlichtbogenschutzsystem versehen worden ist, insbesondere den jeweiligen Komponenten des Störlichtbogenschutzsystems, um das System auszubilden. Insofern weist die Schaltanlage das Schaltfeld und das mindestens eine Anschlussfeld auf, in denen die Komponenten des Störlichtbogenschutzsystems angeordnet sind. Mit anderen Worten lässt sich das erfindungsgemäße Störlichtbogenschutzsystem, insbesondere die Komponenten des Störlichtbogenschutzsystems, den einzelnen Felder der Schaltanlage zuordnen. Dies geschieht derart, dass das Schaltfeld immer ein Zentralgerät aufweist und die Anschlussfelder keines. Die einzelnen Sensormodule können sich in der Art und Anzahl der Sensoren und Sensormodule unterscheiden, sodass jedes Schaltfeld und Anschlussfeld individuell gestaltbar ist.

Das Schaltfeld mit dem Zentralgerät kann gleichzeitig ein Einspeisefeld der Schaltanlage sein, das über einer Spannungsversorgung und einen Einspeiseschalter verfügt. Allerdings muss nicht jedes Einspeisefeld über ein Zentralgerät verfügen, sodass nicht jedes Einspeisefeld zwingend ein Schaltfeld ist. Alle Felder, die kein Einspeisefeld sind, also keine eigene Spannungsversorgung besitzen, sind Abgangsfelder.

Mit anderen Worten lässt sich das System bzw. die Schaltanlage mit Störlichtbogenschutzsystem auf zwei verschiedene Betrachtungsweisen in Felder unterteilen. In einer ersten Betrachtungsweise gibt es Schaltfelder mit Zentralgeräten und Anschlussfelder ohne Zentralgeräte. In einer zweiten Betrachtungsweise gibt es Einspeisefelder mit Einspeiseschaltern und Abgangsfelder ohne eigene Spannungsversorgung.

Das System, insbesondere die Schaltanlage mit dem Störlichtbogenschutzsystem, ist modular erweiterbar. Beispielsweise können zum Erweitern oder Verkleinern der Schaltanlage einzelne Anschlussfelder ergänzt bzw. einzelne Anschlussfelder entfernt werden, ohne dass ein komplett neues Störlichtbogenschutzsystem installiert werden muss. Das Störlichtbogenschutzsystem lässt sich nämlich in analoger Weise modular anpassen. Auch im Falle eines größeren Defekts im System, insbesondere im Störlichtbogenschutzsystem, lassen sich einzelne Anschlussfelder der Schaltanlage ausbauen und durch neue Anschlussfelder ersetzen. Hierbei können die neuen Anschlussfelder bereits Komponenten des Störlichtbogenschutzsystems aufweisen. In Bezug auf das Störlichtbogenschutzsystem bedeutet dies, dass sich einzelne Komponenten ausbauen und durch neue Komponenten ersetzen lassen. Das bereits installierte Störlichtbogenschutzsystem kann also besonders einfach erweitert, umgebaut, erneuert oder verkleinert werden.

Allgemein ausgedrückt lässt sich das Störlichtbogenschutzsystem also an die Schaltanlage anpassen, insbesondere auch nachträglich.

Hierzu können vorkonfektionierte Felder für die Schaltanlage mit Komponenten des Störlichtbogenschutzsystems an das bestehende System, also die Schaltanlage mit dem Störlichtbogenschutzsystem, angeschlossen werden bzw. das bestehende System, insbesondere die Schaltanlage, um vorkonfektionierte Felder erweitert werden.

Nicht nur das Störlichtbogenschutzsystem als solches, sondern auch die einzelnen Schaltfelder und Anschlussfelder der Schaltanlage sind demnach modular aufgebaut, sodass ein Schaltfeld oder Anschlussfeld mehrere Sensoren und Sensormodule sowie mehrere Löschgeräte aufweisen kann. Das Schaltfeld bzw. Anschlussfeld kann auch nachträglich um Sensoren, Sensormodule und Löschgeräte ergänzt werden. Die einzelnen Komponenten sind problemlos nachrüstbar und lassen sich beispielsweise bei einem Defekt einfach tauschen und können anschließend problemlos in das bestehende Störlichtbogenschutzsystem integriert werden, ohne dass das gesamte Schaltfeld bzw. Anschlussfeld oder gar das gesamte System, das die Schaltanlage und das Störlichtbogenschutzsystem umfasst, getauscht werden muss.

Gemäß einem weiteren Aspekt der Erfindung sind die Schaltfelder und Anschlussfelder informationsaustauschend miteinander verbunden, insbesondere die Komponenten des Störlichtbogenschutzsystems in den Schaltfeldern und den Anschlussfeldern. Vorzugsweise ist dazu ein Sensormodul des Schaltfeldes mit einem Sensormodul eines Anschlussfelds über eine Bus-Verbindung informationsaustauschend verbunden. Mit anderen Worten werden die Anschlussfelder durch die in Reihe geschalteten Sensormodule informationsaustauschend miteinander verbunden. Die zentrale Bus-Verbindung erstreckt sich demnach über sämtliche Felder der Schaltanlage, also das mindestens eine Schaltfeld sowie das mindestens eine Anschlussfeld. Dagegen erstreckt sich die abgezweigte Bus-Verbindung nur innerhalb eines Felds.

Damit der Ausgangspunkt eines Sensorsignals, das das Zentralgerät erreicht, von diesem zugeordnet werden kann, ist es besonders wichtig, dass eine Zuordnung des Sensormoduls bzw. des Sensors zu dem jeweiligen Feld stattfindet.

Dies kann bei der Einbindung des jeweiligen Sensors bzw. Sensormoduls über das entsprechende Bedienelement erfolgen. Da nur eine einzige Bus-Verbindung benötigt wird, um zwei Felder miteinander zu verbinden, insbesondere die Komponenten des Störlichtbogenschutzsystems in den beiden Feldern, wird die Feld-zu-Feld-Verdrahtung deutlich minimiert und so der Montageaufwand und die Störanfälligkeit des Störlichtbogenschutzsystems erheblich verringert.

Gemäß einem weiteren Aspekt der Erfindung weist jedes Schaltfeld und jedes Anschlussfeld (mit Ausnahme eines Kuppelfelds) höchstens ein Lichtsensormodul und/oder höchstens ein Stromsensormodul auf. Dadurch wird die Komplexität des jeweiligen Felds verringert, was einen geringeren Verdrahtungsaufwand pro Feld zur Folge hat.

Das Störlichtbogenschutzsystem kann mehrere Zentralgeräte aufweisen, die jeweils einem Schaltfeld der Schaltanlage und/oder einem Hauptsammelschienenabschnitt der Schaltanlage (Schutzzone) zugeordnet sind, wobei jedes Zentralgerät dazu eingerichtet ist, nur Sensorsignale von Sensoren zu empfangen und auszuwerten, die dem Zentralgerät zugeordnet sind. Dadurch lässt sich das Störlichtbogenschutzsystem in einzelne Bereiche (Schutzzonen) aufteilen, die separat voneinander durch verschiedene Zentralgeräte angesteuert werden können. Mit anderen Worten ist also jeder Schutzzone ein Zentralgerät zugeordnet. Im Falle eines Störlichtbogens kann das Zentralgerät, das von dem Sensor und dem Sensormodul ein entsprechendes verarbeitetes Sensorsignal erhalten hat, gezielt nur einen Teil der Schaltanlage kurzschließen oder von der Versorgung trennen, während der Rest der Schaltanlage unverändert weiterlaufen kann. Hierbei handelt es sich um den Teil der Schaltanlage, aus dem das Sensorsignal stammt.

Insbesondere kann jedes Zentralgerät mit einem Leistungsschalter (indirekt) und optional zusätzlich mit wenigstens einem Löschgerät (direkt) verbunden sein, um den Störlichtbogen zu löschen.

Erfindungsgemäß ist auch ein Verfahren zum Detektieren eines Störlichtbogenereignisses mit einem Störlichtbogenschutzsystem, das zumindest die folgenden Schritte aufweist.

In einem ersten Schritt wird mindestens ein störlichtbogenrelevanter Parameter eines potenziellen Störlichtbogenereignisses mit einem Sensor detektiert und der Sensor erzeugt mindestens ein Sensorsignal. Ausgehend von dem Sensor wird somit nur ein einzelnes binäres Sensorsignal ausgegeben.

Anschließend wird in einem zweiten Schritt das mindestens eine Sensorsignal über eine Bus-Verbindung an ein Sensormodul in Echtzeit weitergeleitet.

In einem dritten Schritt verarbeitet das Sensormodul das mindestens eine Sensorsignal, wobei ein verarbeitetes Sensorsignal erhalten wird.

In dem darauffolgenden vierten Schritt wird das verarbeitete Sensorsignal vom Sensormodul über eine Bus-Verbindung zu einem Zentralgerät in Echtzeit weitergeleitet.

In einem fünften Schritt wird das verarbeitete Sensorsignal im Zentralgerät ausgewertet und basierend auf der Auswertung und bei Vorliegen eines tatsächlichen Störlichtbogenereignisses mindestens ein Auslösesignal erzeugt.

In einem optionalen sechsten Schritt wird das mindestens eine Auslösesignal über eine Bus-Verbindung vom Zentralgerät an ein Löschgerät weitergeleitet, mit dem ein Störlichtbogen gelöscht wird. Selbstverständlich kann das Auslösesignal auch vom Zentralgerät an das Relaismodul weitergeleitet werden, das dann die Ansteuerung des Leistungsschalters und/oder des Löschgeräts vornimmt, um den Störlichtbogen zu löschen.

Für den Fall, dass neben dem Leistungsschalter zusätzlich ein Löschgerät in dem Störlichtbogenschutzsystem verbaut ist, erzeugt das Zentralgerät zwei verschiedene Auslösesignale, die gleichzeitig an den Leistungsschalter und das Löschgerät weitergeleitet werden. Mit Hilfe des Löschgeräts wird ein Kurzschluss zwischen zwei Phasen innerhalb der Schaltanlage erzeugt und so der Störlichtbogen gelöscht. Das Löschen geschieht innerhalb weniger Millisekunden. Etwas zeitversetzt wird dann mit dem Leistungsschalter die Leistungszufuhr zur Schaltanlage unterbrochen.

Falls das System, insbesondere die Schaltanlage, mehrere Schutzzonen, also Zentralgeräte umfassende Schaltfelder, aufweist, werden nur die Felder über den Leistungsschalter des Störlichtbogensystems von der Spannungsversorgung getrennt bzw. über das Löschgerät (teilweise) kurzgeschlossen, die dem das Auslösesignal sendenden Zentralgerät zugeordnet sind, also der jeweiligen Schutzzone. Alle weiteren Felder der Schaltanlage werden weiterhin mit Spannung versorgt, sodass nur ein Teil der Schaltanlage ausfällt. Mit anderen Worten fällt nur die betreffende Schutzzone aus, wohingegen die weiteren Schutzzonen weiterhin betriebsbereit sind.

Grundsätzlich kann die Anzahl der Lichtsensormodule der Anzahl der Felder entsprechen.

Gemäß einer bevorzugten Ausführungsform in Drehstromsystemen sind pro Zentralgerät zwei Löschgeräte vorgesehen.

Die zwei Löschgeräte können in Reihe geschaltet sein, insbesondere über eine Bus-Verbindung.

Zudem kann der jeweilige Leistungsschalter über eines der Löschgeräte angesteuert werden, insbesondere über das Löschgerät, das direkt mit dem Zentralgerät verbunden ist.

Sofern ein externes Relaismodul vorhanden ist, können die Löschgeräte auch mit dem Relaismodul verbunden sein.

Grundsätzlich löst das Störlichtbogenschutzsystem immer dann (und nur dann) aus, wenn ein Überstrom detektiert wurde und ein Sensor einen störlichtbogenrelevanten Parameter gemessen hat und ein Sensorsignal erzeugt hat. Die Detektion des Überstroms kann unabhängig vom Ort des Störlichtbogens erfolgen, das Erkennen eines störlichtbogenrelevanten Parameters erfolgt am Entstehungsort, sodass basierend auf dem Sensorsignal nachvollzogen werden kann, wo der Störlichtbogen entstanden ist.

Weitere Merkmale und Vorteile der Erfindung ergeben sich aus den Figuren auf die im Folgenden Bezug genommen wird. In den Figuren zeigt:
- Fig. 1 einen schematischen Schaltplan eines erfindungsgemäßen Systems mit einem erfindungsgemäßen Störlichtbogenschutzsystem und einer Schaltanlage mit einem Schaltfeld und drei Anschlussfeldern, wobei insgesamt ein Zentralgerät, fünf Sensormodule und sieben Sensoren vorgesehen sind;
- Fig. 2 einen schematischen Schaltplan eines erfindungsgemäßen Systems mit einem erfindungsgemäßen Störlichtbogenschutzsystem und einer Schaltanlage mit einem Schaltfeld und drei Anschlussfeldern, wobei insgesamt ein Zentralgerät, ein Relaismodul, fünf Sensormodule und sieben Sensoren vorgesehen sind;
- Fig. 3 einen schematischen Schaltplan eines erfindungsgemäßen Systems mit einem erfindungsgemäßen Störlichtbogenschutzsystem und einer Schaltanlage mit zwei Sammelschienenabschnitten (Schutzzonen), wobei jeweils ein Zentralgerät und ein Kuppelschalter zwischen den beiden Schutzzonen vorgesehen sind,
- Fig. 4 einen schematischen Schaltplan eines erfindungsgemäßen Systems mit einem erfindungsgemäßen Störlichtbogenschutzsystem für eine Schutzzone, mit insgesamt einem Zentralgerät, fünf Sensormodulen, sieben Sensoren, zwei Löschgeräten und einer Anzeigeeinheit;
- Fig. 5 einen schematischen Schaltplan eines erfindungsgemäßen Systems mit einem erfindungsgemäßen Störlichtbogenschutzsystem und einer Schaltanlage mit zwei Sammelschienenabschnitten (Schutzzonen), wobei jeweils ein Zentralgerät und zwei Löschgeräte und einem Kuppelschalter zwischen den beiden Schutzzonen vorgesehen sind,
- Fig. 6 eine schematische Darstellung eines Lichtsensors ausgebildet als ein Punktsensor;
- Fig. 7 eine schematische Darstellung eines Sensormoduls ausgebildet als ein Punktsensormodul;
- Fig. 8 eine schematische Darstellung eines Sensormoduls ausgebildet als ein Liniensensormodul;
- Fig. 9 eine schematische Darstellung eines Stromsensors ausgebildet als eine Rogowskispule;
- Fig. 10 eine schematische Darstellung eines Stromsensormoduls ausgebildet als ein Rogowskimodul;
- Fig. 11 eine schematische Darstellung eines Relaismoduls;
- Fig. 12a und 12b zwei schematische Darstellungen von verschiedenen Ausgestaltungen von Zentralgeräten;
- Fig. 13 eine schematische Darstellung eines Löschgeräts;
- Fig. 14 eine schematische Darstellung von drei Bus-Systemen eines erfindungsgemäßen Störlichtbogenschutzsystems;
- Fig. 15 eine schematische Darstellung eines Verfahrens zum Konfigurieren eines erfindungsgemäßen Störlichtbogenschutzsystems;
- Fig. 16 eine schematische Darstellung eines Verfahrens zum Detektieren und Löschen eines Störlichtbogens mit einem erfindungsgemäßen Störlichtbogenschutzsystem;
- Fig. 17 eine schematische Darstellung von Verfahren innerhalb eines Sensors;
- Fig. 18 eine schematische Darstellung von Verfahren innerhalb eines Sensormoduls;
- Fig. 19 eine schematische Darstellung von Verfahren innerhalb eines Zentralgeräts; und
- Fig. 20 eine schematische Darstellung von Verfahren innerhalb eines Löschgeräts.

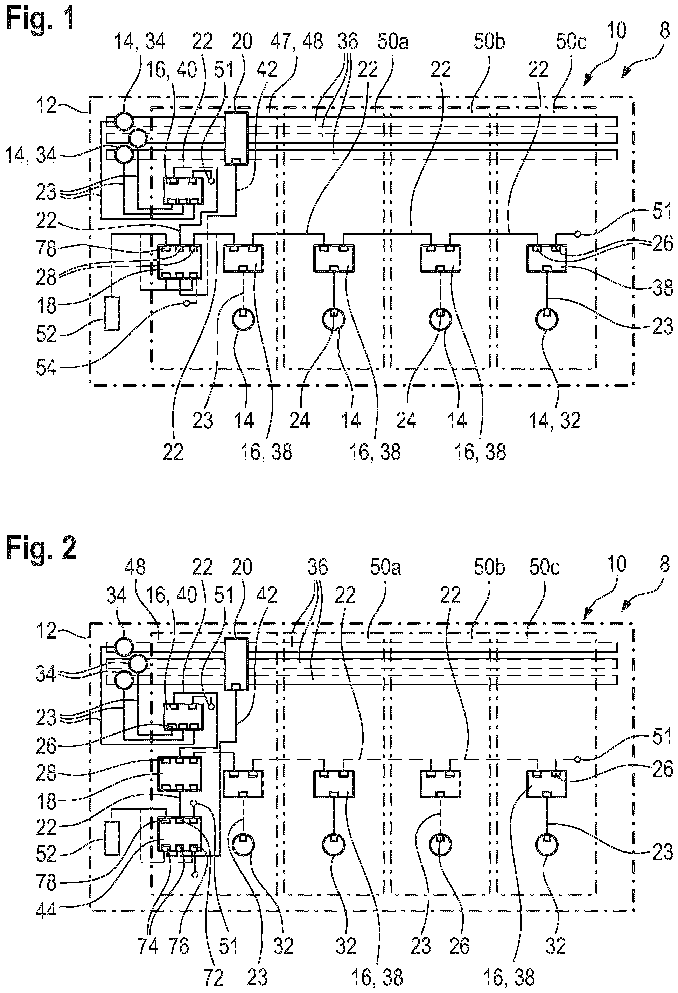

Die Figuren 1 bis 5 zeigen verschiedene Ausführungsformen eines Systems 8 mit einem Störlichtbogenschutzsystem 10 und einer Schaltanlage 12.

Das Störlichtbogenschutzsystem 10 ist dabei vollständig im Inneren der Schaltanlage 12 aufgenommen und deren elektronische Erfassungsgeräte bzw. Komponenten des Störlichtbogenschutzsystems 10 können an einer oder mehreren Hutschienen (nicht dargestellt) montiert werden.

Das Störlichtbogenschutzsystem 10 ist insbesondere für Niederspannungsschaltanlagen geeignet.

Mit dem Störlichtbogenschutzsystem 10 lässt sich ein Störlichtbogen, der in der Schaltanlage 12 entstanden ist, innerhalb einer Löschdauer von wenigen Millisekunden, insbesondere in weniger als 75 ms oder sogar in weniger als 2 ms ab Auftreten und Erkennen des Störlichtbogens löschen. Die erreichbare Löschdauer hängt dabei von der konkreten Ausgestaltung des Störlichtbogenschutzsystems 10 ab, wie nachfolgend noch detailliert erläutert wird. Durch die geringe Löschdauer wird grundsätzlich verhindert, dass sich der Störlichtbogen innerhalb der Schaltanlage 12 ausbreitet und einen großen Schaden an dieser verursacht.

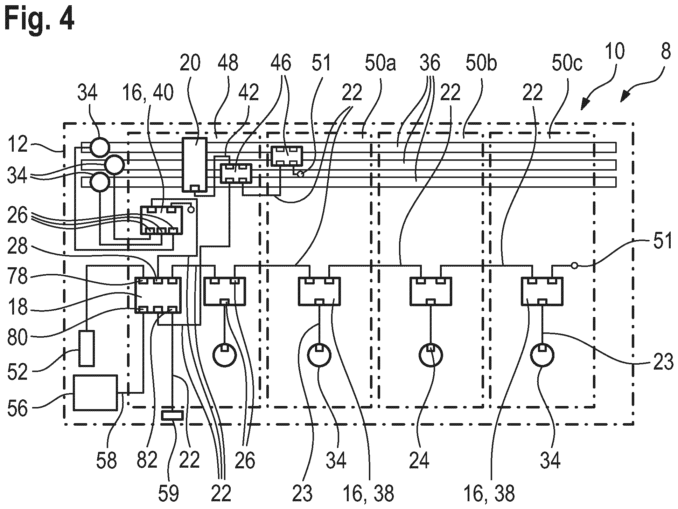

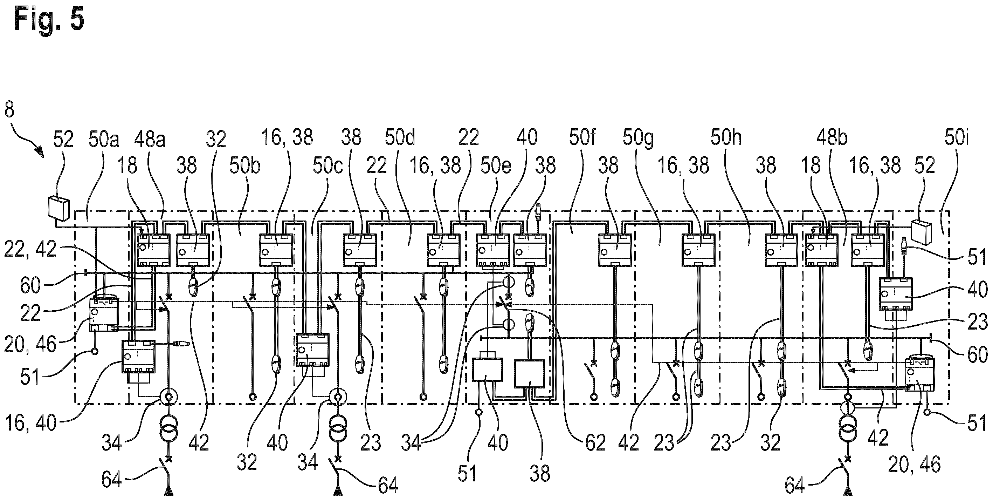

Die Figuren 1 bis 3 zeigen ein Störlichtbogenschutzsystem 10, das eine Löschdauer von weniger als 75 ms aufweist, in den Figuren 4 und 5 ist ein Störlichtbogenschutzsystem 10 dargestellt, das sogar eine Löschdauer von unter 2 ms ermöglicht.

Ganz grundsätzlich weist das Störlichtbogenschutzsystem 10 verschiedene Sensoren 14 auf, mit denen mindestens ein störlichtbogenrelevanter Parameter detektiert und mindestens ein Sensorsignal erzeugt werden kann. Dieses Sensorsignal wird anschließend an ein Sensormodul 16 weitergeleitet, welches das Sensorsignal verarbeitet und ein verarbeitetes Sensorsignal an ein Zentralgerät 18 weiterleitet. Dabei kann das Sensormodul 16 direkt mit dem Zentralgerät 18 verbunden sein, oder ein oder mehrere Sensormodule 16 sind zwischengeschaltet.

Das Zentralgerät 18 wertet das verarbeitete Sensorsignal aus und erzeugt, falls tatsächlich ein Störlichtbogenereignis vorliegt, ein Auslösesignal, was an einen Leistungsschalter 20 gesendet wird. Der Leistungsschalter 20 sorgt letztendlich dafür, dass die Spannungsversorgung unterbrochen wird, wodurch der Störlichtbogen in der Schaltanlage 12 gelöscht wird und so ein Schaden an der Schaltanlage 12 und deren Umgebung minimiert wird.

Die Sensoren 14, die Sensormodule 16 sowie das Zentralgerät 18 des Störlichtbogenschutzsystems 10 sind über Bus-Verbindungen 22, 23, insbesondere CAN-Bus-Verbindungen, miteinander verbunden. Die Bus-Verbindungen 22, 23 sind dabei mittels Busleitung realisiert.

Genauer gesagt ist eine zentrale Bus-Verbindung 22 vorgesehen, über die das Zentralgerät 18 mit den Sensormodulen 16 verbunden ist, wobei von den jeweiligen Sensormodulen 16 jeweils eine abgezweigte Bus-Verbindung 23 abgeht, mit der die Sensoren 14 jeweils verbunden sind. Mit anderen Worten ist der Sensor 14 über eine (von der zentralen Bus-Verbindung 22 abgezweigte) Bus-Verbindung 23 mit dem Sensormodul 16 verbunden, wohingegen das Sensormodul 16 über eine eigene Bus-Verbindung 22, nämlich der zentralen Bus-Verbindung 22, entweder mit einem anderen Sensormodul 16 oder mit dem Zentralgerät 18 verbunden ist.

Es liegen demnach zwei Arten von Bus-Systemen vor, nämlich das zentrale Bus-System, über das die Sensormodule 16 sowie das Zentralgerät 18 miteinander kommunizieren, sowie die jeweiligen abgezweigten Bus-Systeme, über die die Sensoren 14 mit den zugeordneten Sensormodulen 16 kommunizieren.

Die Sensormodule 16 stellen demnach sicher, dass die von den Sensoren 14 erhaltenen Signal vom abgezweigten Bus-System in das zentrale Bus-System übertragen werden, sodass die Signale entsprechend an das Zentralgerät 18 übermittelt werden können. Anders ausgedrückt fungiert das Sensormodul 16, welches mit beiden Bus-Systemen verbunden ist, als Buskoppler.

Über die Bus-Verbindungen 22, 23 können nicht nur Informationen wie das Sensorsignal von dem Sensor 14 an das Sensormodul 16 sowie das verarbeitete Sensorsignal vom Sensormodul 16 zum Zentralgerät 18 übertragen werden, sondern der Sensor 14 kann auch Signale von dem Sensormodul 16 oder dem Zentralgerät 18 empfangen bzw. das Sensormodul 16 oder das Zentralgerät 18 können Informationen von dem Sensor 14 oder dem Sensormodul 16 abfragen. Die Bus-Verbindung 22, 23 ermöglicht grundsätzlich eine bidirektionale Kommunikation zwischen allen Komponenten des Störlichtbogenschutzsystems 10.

Darüber hinaus werden die Sensoren 14 und die Sensormodule 16 über die Bus-Verbindung 22, 23 mit einer Spannung versorgt, die beispielsweise vom Zentralgerät 18 zur Verfügung gestellt wird, sodass ein separat ausgebildeter Spannungsanschluss am jeweiligen Sensor 14 bzw. am jeweiligen Sensormodul 16 entfällt.

Die Bus-Verbindungen 22, 23 weisen an beiden Enden einen M8- bzw. einen M12-Stecker auf, über den auch eine Spannung von 24 V übertragen werden kann. Eine solche Steck- bzw. Schraubverbindung mit einem M8- bzw. M12-Stecker stellt einen besonders sicheren Halt der Verbindung sicher.

Die Stecker der Bus-Verbindungen 22, 23 sind in entsprechenden Anschlüssen bzw. Buchsen in den Sensoren 14, den Sensormodulen 16 und dem Zentralgerät 18 steckbar aufgenommen. Dazu weist der Sensor 14 mindestens einen Sensoranschluss 24 auf, das Sensormodul 16 mindestens zwei Sensormodulanschlüsse 26 und das Zentralgerät 18 mindestens einen Zentralgeräteanschluss 28 auf. Die genaue Ausgestaltung der Anschlüsse wird in den Figuren 5 bis 13 näher erläutert.

Die im Störlichtbogenschutzsystem 10 eingebauten Sensoren 14 sind, wie eingangs schon erwähnt, dazu eingerichtet, störlichtbogenrelevante Parameter zu detektieren und falls sie einen solchen Parameter detektiert haben, ein Sensorsignal an das Sensormodul 16 zu senden. Bei dem störlichtbogenrelevanten Parameter handelt es sich beispielsweise um Licht, Strom, Druck oder Temperatur.

Abhängig davon, welcher störlichtbogenrelevante Parameter detektiert werden soll, weist das Störlichtbogenschutzsystem 10 verschiedene Arten von Sensoren 14 auf.

Das Störlichtbogenschutzsystem 10 gemäß den Ausführungsformen der Figuren 1 und 2 weist insgesamt vier Lichtsensoren 32 auf, die jeweils als Punktsensoren ausgebildet sind. Anstelle von Punktsensoren können die Lichtsensoren 32 auch als Liniensensoren (nicht dargestellt) ausgebildet sein.

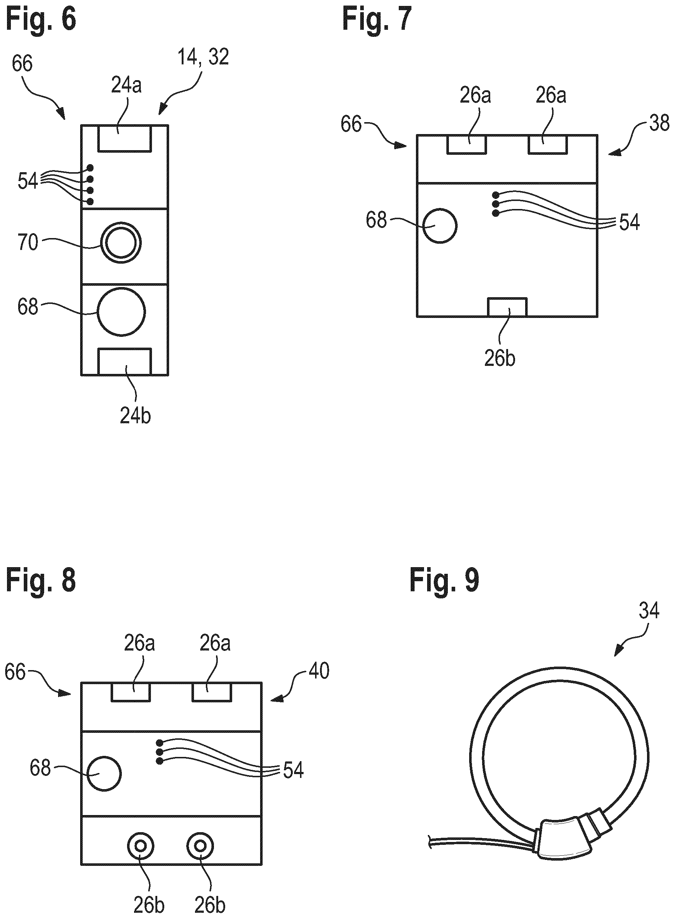

Die Lichtsensoren 32 befinden sich im Inneren der Schaltanlage 12 und detektieren jegliche Form von Licht. Dabei sind sie vorzugsweise unempfindlich gegenüber Umgebungslicht mit einer Lichtintensität von bis zu 5000 Lux. Der genaue Aufbau und die Spezifikation eines Lichtsensors 32 am Beispiel eines Punktsensors wird später anhand der Figur 6 erläutert.

Darüber hinaus weist das Störlichtbogenschutzsystem 10 drei Stromsensoren 34 auf, die den Strom beispielsweise an drei Außenleitern der Sammelschienen 36 der Schaltanlage 12 messen. Die Stromsensoren sind als Rogowskispulen ausgebildet, die den Strom in einen Frequenzbereich (Niederfrequenzbereich) von 2 bis 1000 Hz messen.

Die unterschiedlichen Arten von Sensoren 14 sind mit verschiedenen Arten von Sensormodulen 16 verbunden, sodass das Sensorsignal des Sensors 14 an ein entsprechendes Sensormodul 16 gesendet und von diesem verarbeitet werden kann.

Handelt es sich bei dem Sensor 14 um einen Lichtsensor 32, so ist dieser mit einem Lichtsensormodul 38 wie ein Punktsensormodul oder ein Liniensensormodul über eine Bus-Verbindung, nämlich der abgezweigten Bus-Verbindung 23, verbunden.

Handelt es sich bei dem Sensor 14 um einen Stromsensor 34 wie eine Rogowskispule, so ist der Sensor 14 mit einem Stromsensormodul 40, genau genommen einem Rogowskimodul, über eine Bus-Verbindung verbunden, nämlich der abgezweigten Bus-Verbindung 23.

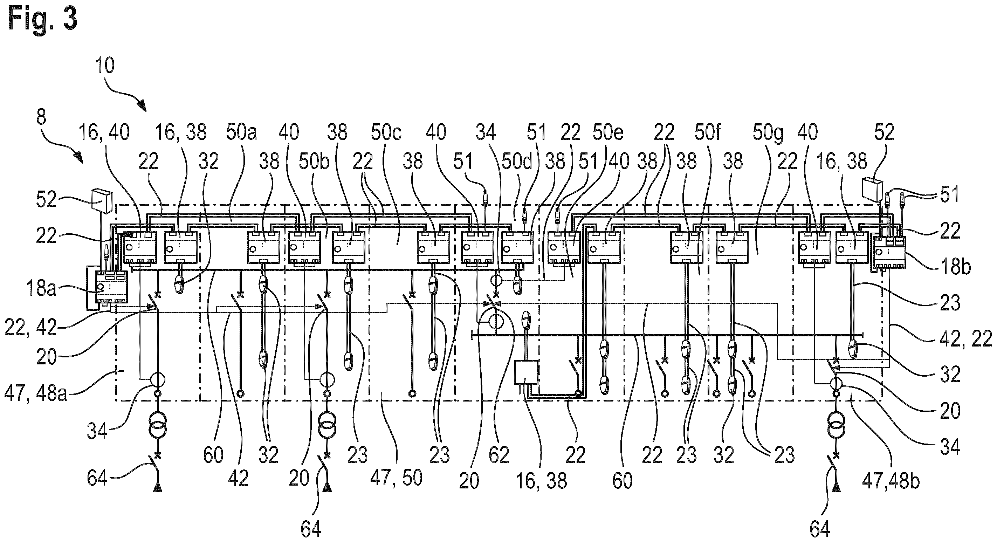

An das Lichtsensormodul 38 können dabei bis zu vier Lichtsensoren 32 in Reihe geschaltet sein (siehe auch Figur 3, wo zumindest zwei Lichtsensoren 32 in Reihe geschaltet sind), sodass zumindest manche Lichtsensoren 32 lediglich indirekt mit dem Lichtsensormodul 38 verbunden sind.

Bei dem Stromsensormodul 40 sind die Stromsensoren 34 vorzugsweise alle separat über eine eigene Sensorleitung jeweils mit dem Stromsensormodul 40 direkt verbunden, wie dies in den Figuren 1 bis 5 gezeigt ist.

Der genaue Aufbau und die Spezifikation des Lichtsensormoduls 38 wird später anhand der Figuren 7 und 8 erläutert, die Erklärung zum Aufbau des Stromsensormoduls 40 erfolgt bei den Figuren 7 und 8.

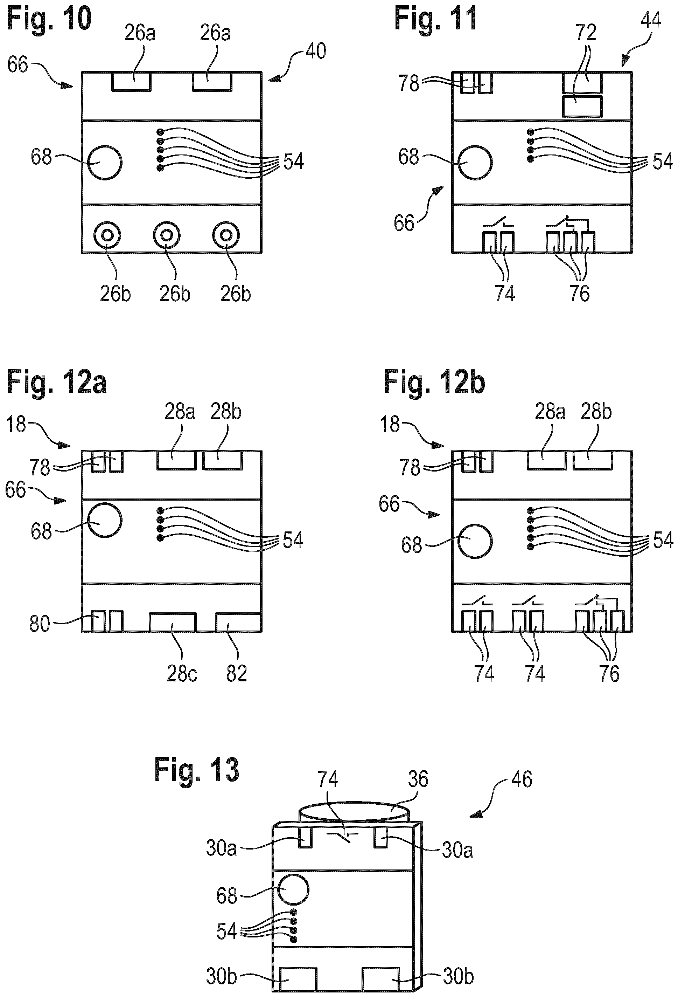

Das Zentralgerät 18 verarbeitet das verarbeitete Sensorsignal weiter und wertet es aus, um festzustellen, ob tatsächlich ein Störlichtbogenereignis vorliegt oder nicht. Der genaue Aufbau des Zentralgeräts 18 wird später anhand von Figur 12 näher beschrieben.

Liegt ein tatsächliches Störlichtereignis vor, so sendet das Zentralgerät 18 ein Auslösesignal über Auslöseleitung 42 an den Leistungsschalter 20, der die Spannungsversorgung unterbricht.

Dementsprechend sendet das Zentralgerät 18 ein für den Leistungsschalter 20 entsprechendes Auslösesignal über die Auslöseleitung 42.

Wie in Figur 2 gezeigt ist, kann das Zentralgerät 18 alternativ auch ein Auslösesignal an ein separat ausgebildetes Relaismodul 44 senden.

Das Relaismodul 44 bestromt einen Arbeitsstromauslöser des Leistungsschalters 20, sodass letztendlich die Leistungszufuhr bzw. Spannungsversorgung über die Sammelschienen 36 unterbrochen und der Störlichtbogen gelöscht wird. Der genaue Aufbau des Relaismodul 44 wird bei Figur 11 näher erläutert.

Der Leistungsschalter 20 ist ein elektromechanisch auslösender Schalter und ist so ausgebildet, dass er die Spannungsversorgung für die gesamte Schaltanlage 12 bzw. der jeweiligen Schutzzone und somit für alle drei Sammelschienen 36 unterbricht. Damit wird im vorliegenden Ausführungsbeispiel die gesamte Schaltanlage 12 von der Leistungszufuhr getrennt und der Störlichtbogen gelöscht.

Da der Leistungsschalter 20 ein elektromechanisch wirkendes Bauteil ist und eine bestimmte Zeitdauer benötigt, um von einem geschlossenen Zustand in einen geöffneten Zustand überführt zu werden, weist das Störlichtbogenschutzsystem 10 gemäß der Figuren 1 bis 3 eine Löschdauer von unter 75 ms auf, insbesondere von unter 50 ms.

Ergänzend zum Leistungsschalter 20 kann ein Löschgerät 46 vorgesehen sein, wie es in den Figuren 4 und 5 gezeigt ist.

Die Löschgeräte 46 zeichnen sich dadurch aus, dass sie jeweils elektrisch leitfähig an zwei der drei Sammelschienen 36 gleichzeitig angeschlossen sind, sodass die Löschgeräte 46 diese Sammelschienen 36 bei Vorliegen eines Auslösesignals elektrisch leitfähig miteinander verbinden können. In größeren Schaltanlagen mit Kuppelschaltern, wie in Fig. 5 dargestellt, sind jedoch nicht alle Sammelschienen 36 bzw. Sammelschienenabschnitte 60 beeinträchtigt weswegen ein Teil der Schaltanlage 12 weiter betrieben werden kann.

Das Erzeugen eines Kurzschlusses mittels des Löschgeräts 46 geschieht deutlich schneller als der elektromechanisch wirkende Leistungsschalter 20, wodurch das Störlichtbogenschutzsystem 10, das das Löschgerät 46 aufweist, eine deutlich geringere Löschdauer hat als ein Störlichtbogenschutzsystem 10 ohne Löschgerät 46.

Die Löschdauer des in den Figuren 4 und 5 gezeigten Störlichtbogenschutzsystems 10 beträgt beispielsweise weniger als 2 ms.

Vor allem aus Figur 4 geht hervor, dass das Löschgerät 46 zusätzlich zu dem Leistungsschalter 20 vorgesehen ist. Insbesondere ist der Leistungsschalter mit dem Löschgerät 46 verbunden, sodass die Auslöseleitung 42 vom Löschgerät 46 ausgeht, wobei das Löschgerät 46 selbst über die Bus-Verbindung 22 mit dem Zentralgerät 18 verbunden ist. Insbesondere sind beide Löschgeräte 46 über die Bus-Verbindung 22 in Reihe mit dem Zentralgerät 18 verbunden.

Der Leistungsschalter 20dient dabei als zusätzliche Sicherung, insbesondere als nachgelagerte Sicherung für den Fall, dass eines der beiden oder beide Löschgeräte 46 den Störlichtbogen nicht gelöscht haben.

Zum Ansteuern der beiden Löschgeräte 46 und des Leistungsschalters 20 kann das Zentralgerät 18 zwei verschiedene Auslösesignale aussenden, wobei eines der Auslösesignale an die Löschgeräte 46 gerichtet ist und das zweite Auslösesignal an den Leistungsschalter 20 gerichtet ist. In der gezeigten Ausführungsform sendet das Zentralgerät 18 jedoch nur ein Auslösesignal an das über die Bus-Verbindung 22 direkt angeschlossene Löschgerät 46 aus, das wiederum den Leistungsschalter 20 - sofern nötig - über die die Auslöseleitung 42 ansteuert.

Das in den Figuren 1 bis 5 dargestellte Störlichtbogenschutzsystem 10 ist modular aufgebaut, was bedeutet, dass einzelne Sensoren 14 und/oder Sensormodule 16 und/oder Löschgeräte 46 einfach ausgetauscht oder nachgerüstet werden können. Gegebenenfalls können auch Zentralgeräte 18 nachgerüstet oder ausgetauscht werden.

Darüber hinaus ist das System 8, insbesondere das Störlichtbogenschutzsystem 10, auch in dem Sinne modular aufgebaut, dass das System 8, insbesondere deren Schaltanlage 12, in mehrere einzelne Felder 47 unterteilbar ist, die bauseits und modular miteinander verbunden werden können.

Die Schaltanlage 12 weist also mehrere Felder 47 auf, denen jeweils Komponenten des Störlichtbogenschutzsystems 10 zugeordnet sind. Mit anderen Worten können die einzelnen Komponenten des Störlichtbogenschutzsystems 10 den einzelnen Feldern 47 der Schaltanlage 12 zugeordnet werden bzw. in den einzelnen Feldern 47 der Schaltanlage 12 angeordnet sein.

Insgesamt kann das System 8, insbesondere die Schaltanlage 12, bis zu 23 Felder 47 aufweisen.

Das System 8, insbesondere die Schaltanlage 12, weist dazu mindestens ein Schaltfeld 48 auf, in dem ein Zentralgerät 18, ein Sensormodul 16 sowie ein Sensor 14 vorgesehen ist. Das Zentralgerät 18, das Sensormodul 16 sowie der Sensor 14 sind die Komponenten des Störlichtbogenschutzsystems 10. Dieses Schaltfeld 48 der Schaltanlage 12 ist vorliegend gleichzeitig ein Einspeisefeld, das separat mit einer Spannungsversorgung verbunden ist.

Ferner kann das System 8, insbesondere die Schaltanlage 12, mindestens ein Anschlussfeld 50 aufweisen, welches sich vom Schaltfeld 48 dahingehend unterscheidet, dass kein Zentralgerät 18 des Störlichtbogenschutzsystems 10 vorgesehen ist. Dieses Anschlussfeld 50 kann ein Abgangsfeld sein, das keine separate Spannungsversorgung aufweist.

Sofern das System 8, insbesondere die Schaltanlage 12, mehrere Felder 47 aufweist, sind typischerweise mehr Anschlussfelder 50 als Schaltfelder 48 vorgesehen.

Das System 8, das in den Figuren 1, 2 und 4 dargestellt ist, insbesondere die Schaltanlage 12 des Systems 8, weist insgesamt vier Felder 47 auf, wobei eines davon ein Schaltfeld 48 und drei Anschlussfelder 50 sind.

Das Schaltfeld 48 (in den Figuren ganz links dargestellt) weist, wie vorstehend erläutert, das Zentralgerät 18 sowie ein Stromsensormodul 40, drei jeweils direkt damit verbundene Stromsensoren 34, ein Lichtsensormodul 38 auf, an dem ein Lichtsensor 32 angeschlossen ist. Das Zentralgerät 18, das Stromsensormodul 40, die Stromsensoren 34, das Lichtsensormodul 38 sowie der Lichtsensor 32 stellen die Komponenten des Störlichtbogenschutzsystems 10 dar, welche im Schaltfeld 48 der Schaltanlage 12 vorgesehen sind.

Die Anschlussfelder 50 weisen nur jeweils einen Lichtsensor 32 und ein Lichtsensormodul 38 auf, an dem der jeweilige Lichtsensor 32 angeschlossen ist.

Alle insgesamt vier Lichtsensoren 32 sind direkt mit dem jeweiligen Lichtsensormodul 38 über eine Bus-Verbindung 23 verbunden.

Die genaue Position und Anordnung der Komponenten innerhalb eines Schaltfelds 48 oder Anschlussfelds 50 kann beliebig sein. Wichtig für einen optimalen Schutz ist nur, dass jedes Schaltfeld 48 bzw. Anschlussfeld 50 mit einer ausreichenden Anzahl an Sensoren 14 bestückt ist und diese so angeordnet sind, dass das gesamte Schaltfeld 48 bzw. Anschlussfeld 50 auf einen Störlichtbogen hin überwacht werden kann.

Die Anschlussfelder 50 sowie die dort vorgesehenen Komponenten des Störlichtbogenschutzsystems 10 sind jeweils in Reihe hintereinandergeschaltet und durch eine einzige Bus-Verbindung 22 miteinander verbunden. Genauer gesagt sind jeweils die Lichtsensormodule 38 der einzelnen Anschlussfelder 50 über die zentrale Bus-Verbindung 22 miteinander verbunden, also in Reihe geschaltet. Das dem Schaltfeld 48 nächstliegende Anschlussfeld 50 ist mit dem Schaltfeld 48 über die zentrale Bus-Verbindung 22 verbunden, also die entsprechenden Komponenten des Störlichtbogenschutzsystems 10, die dem Schaltfeld 48 und dem entsprechenden Anschlussfeld 50 zugeordnet sind.

Das Lichtsensormodul 38 im Anschlussfeld 50c (in den Figuren ganz rechts dargestellt), das kein zweites benachbartes Anschlussfeld 50 aufweist, ist nur an einem Sensormodulanschluss 26 mit dem Sensormodul 16 des Anschlussfelds 50b verbunden. An einem zweiten Sensormodulanschluss 26 ist ein Abschluss 51 angeschlossen.

Der Abschluss 51 kann ein Abschlusswiderstand sein. Voraussetzung ist lediglich, dass der Abschluss 51 etwaige Reflexionen verhindert. Da über die Bus-Verbindungen 22 sehr hochfrequente elektrische Signale übertragen werden, können an Verzweigungen und Enden, wie dem Sensormodul 16 entsprechende Reflexionen auftreten. Solche Reflexionen können zur Auslöschung von gesendeten oder empfangenen Signalen durch Interferenz an bestimmten Stellen führen, was wiederum eine Fehlfunktion des gesamten Störlichtbogenschutzsystems 10 nach sich ziehen würde. Dies kann hierdurch wirkungsvoll verhindert werden.

Auch das Stromsensormodul 40 im Schaltfeld 48 weist an einem nicht belegten Sensormodulanschluss 26 einen Abschluss 51 auf.

Das gesamte Störlichtbogenschutzsystem 10 wird über einen einzigen Netzanschluss 52 mit Spannung versorgt. In Figur 1 ist dazu das Zentralgerät 18 mit dem Netzanschluss 52 verbunden, in Figur 2 ist das Relaismodul 44 mit dem Netzanschluss 52 verbunden. Der Netzanschluss 52 kann grundsätzlich eine unterbrechungsfreie Spannungsversorgung (USV) aufweisen, sodass das Störlichtbogenschutzsystem 10 auch bei einem Spannungsausfall noch (zumindest vorübergehend) betriebsfähig ist. Darüber hinaus ermöglicht die unterbrechungsfreie Spannungsversorgung auch den betriebsbereiten Zustand des Störlichtbogenschutzsystems 10 vor dem Zuschalten der Schaltanlage 12.

Die am Zentralgerät 18 bzw. das Relaismodul 44 anstehende Versorgungsspannung wird über die Bus-Verbindungen 22 zu den einzelnen Komponenten des Störlichtbogenschutzsystems 10 weitergeleitet, sodass keiner der Komponenten einen separaten Versorgungsanschluss benötigt.

Auch ein an das Zentralgerät 18 und/oder das Relaismodul 44 angeschlossenes Anzeigeelement 54, beispielsweise in Form wenigstens eines Leuchtmelders, wie in den Figuren 1 und 2 gezeigt ist, kann über die Bus-Verbindung 22 mit Spannung versorgt werden.

Mit Hilfe des Anzeigeelements 54 kann anhand der Farbe und/oder der Leuchtintensität des vom Anzeigeelement 54 ausgesandten Lichts für einen Benutzer angezeigt werden, ob ein tatsächliches Störlichtbogenereignis vorliegt oder nicht.

Darüber hinaus können auch der Sensor 14, das Sensormodul 16 und das Löschgerät 46 jeweils ein Anzeigeelement 54 aufweisen, worüber der Benutzer Auskunft über einen aktuellen Status der jeweiligen Komponente und/oder des Störlichtbogenschutzsystem 10 insgesamt erhält.

Ferner kann mit dem Zentralgerät 18 auch eine Anzeigeeinheit 56 verbunden sein. Vorzugsweise ist die Anzeigeeinheit 56, wie in Figur 4 dargestellt, ein Display, das über eine Datenverbindung 58 angeschlossen ist.

Über die Anzeigeeinheit 56 kann neben einem aktuellen Status bzw. Zustand des gesamten Störlichtbogenschutzsystems 10, also ob ein Störlichtbogen vorliegt oder nicht, das Vorhandensein einzelner Komponenten und deren Status angezeigt werden. Auch ein möglicher Defekt und/oder die Notwendigkeit eines Tausches oder einer Wartung einzelner Komponenten des Störlichtbogenschutzsystems 10 oder des gesamten Störlichtbogenschutzsystems 10 kann auf der Anzeigeeinheit 56 angezeigt werden.

Die Anzeigeeinheit 56 kann über einen geschützten Bereich verfügen, der nur zugänglich ist, falls ein entsprechendes Passwort eingegeben wird.

Darüber hinaus kann das Zentralgerät 18 auch mit einem Speicher 59 verbunden sein, in dem es verschiedene Informationen, wie die Anzahl und Position einzelner Komponenten, also die Systemkonfiguration, Änderungen in der Systemkonfiguration und/oder systemrelevante Informationen gespeichert sind.

Der Speicher 59 kann alternativ im Zentralgerät 18 integriert sein. Ebenso ist es möglich, dass der Speicher 59 zumindest teilweise als ein externer Speicher ausgebildet ist, beispielsweise in Form eines Cloud-Speichers.

Grundsätzlich lassen sich die im Speicher 59 hinterlegten Daten und Informationen über die Anzeigeeinheit 56 darstellen.

Das in den Figuren 3 und 5 dargestellte Störlichtbogenschutzsystem 10 weist einen komplexeren Aufbau auf als die in den Figuren 1, 2 und 4 dargestellten Störlichtbogenschutzsysteme 10, da es sich über zwei Sammelschienenabschnitte (Schutzzonen) mit insgesamt zwei Schaltfeldern 48 und insgesamt sieben Anschlussfeldern 50 (Figur 3) bzw. neun Anschlussfeldern 50 (Figur 5) der Schaltanlage 12 erstreckt.

Die Schaltfelder 48 bzw. Anschlussfelder 50 stellen gleichzeitig Einspeisefelder, Kuppelungsfelder, Abgangsfelder und ggf. Löschgerätefelder des Systems 8 dar, insbesondere der Schaltanlage 12. Das Störlichtbogenschutzsystem 10 gemäß Figur 3 erstreckt sich also über insgesamt drei Einspeisefelder 48a, 48b und 50b, ein Kuppelungsfeld 50d und insgesamt fünf Abgangsfelder 50a, 50c, 50e, 50f, 50g der Schaltanlage 12. Das System 8 gemäß Figur 5, insbesondere die Schaltanlage 12, verfügt über insgesamt drei Einspeisefelder 48a, 48b und 50c, ein Kuppelungsfeld 50e, insgesamt fünf Abgangsfelder 50b, 50d, 50f, 50g, 50h und weitere zwei Löschgerätefelder 50a und 50i, über die sich das Störlichtbogenschutzsystem 10 erstreckt.

Die Störlichtbogenschutzsysteme 10 sind also für größere Schaltanlagen 12 geeignet, die beispielsweise mehrere Sammelschienenabschnitte 60 (Schutzzonen) aufweisen.

Die Schaltanlagen 12 der Figuren 3 und 5 weisen insgesamt zwei Sammelschienenabschnitte 60 auf, die über einen Kuppelschalter 62 elektrisch leitend miteinander verbindbar sind.

Den beiden Sammelschienenabschnitte 60 sind des Weiteren drei Einspeiseschalter 64 zugeordnet, insbesondere Mittelspannungs-Einspeiseschalter.

Das in Figur 3 dargestellte Störlichtbogenschutzsystem 10 weist insgesamt zwei Zentralgeräte 18a, 18b auf, die an den beiden gegenüberliegenden Seiten in zwei Schaltfeldern 48a, 48b des Systems 8 bzw. der Schaltanlage 12 angeordnet sind.

Jedem Zentralgerät 18 sind insgesamt fünf Felder 47 der Schaltanlage 12 zugeordnet. Das bedeutet, dass jedes Zentralgerät 18 nur die Sensorsignale empfangen kann, die von den Sensoren 14 erzeugt wurden, die sich in den Anschlussfeldern 50 der Schaltanlage 12 befinden, die dem jeweiligen Zentralgerät 18 des Störlichtbogenschutzsystems 10 zugeordnet sind.

Bis auf das Anschlussfeld 50d, das gleichzeitig ein Kuppelfeld ist und sich in der Mitte des Systems 8 befindet, ist jedes Anschlussfeld 50 nur einem einzigen Zentralgerät 18 zugeordnet. Im Kuppelfeld bzw. Anschlussfeld 50d ist der Kuppelschalter 62 vorgesehen, über den die beiden Sammelschienenabschnitte 60 voneinander trennbar sind.

Die in der Figur 3 links dargestellten drei Anschlussfelder 50a bis 50c sind dabei dem links angeordneten Zentralgerät 18a zugeordnet, wohingegen die in der Figur 3 rechts dargestellten drei Anschlussfelder 50e bis 50g dem rechts angeordneten Zentralgerät 18b zugeordnet sind. Das Anschlussfeld 50d, welches vorliegend als Kuppelfeld ausgebildet ist, ist sowohl dem links angeordneten Zentralgerät 18a als auch dem rechts angeordneten Zentralgerät 18b zugeordnet, genauer gesagt ist der obere Teil des Kuppelfelds 50d dem links angeordneten Zentralgerät 18a zugeordnet, während der untere Teil des Anschlussfelds 50d dem rechten Zentralgerät 18b zugeordnet ist.

Das Zentralgerät 18b kann somit kein Sensorsignal eines Sensors 14 aus einem der Anschlussfelder 50a bis 50c empfangen und das Zentralgerät 18a erhält kein Sensorsignal eines Sensors 14 der Anschlussfelder 50e bis 50g.

Grundsätzlich weist ein Störlichtbogenschutzsystem 10 immer mindestens ein Zentralgerät 18 mehr auf als es Kuppelschalter 62 hat.

Hinter jedem Einspeiseschalter 64 befindet sich ein Stromsensor 34, der den in die Schaltanlage 12 fließenden Strom misst.

Wird von dem Stromsensor 34 beispielsweise ein zu hoher Strom detektiert, sendet der Stromsensor 34 ein Sensorsignal an das zugehörige Stromsensormodul 40, welches das Sensorsignal verarbeitet und ein verarbeitetes Sensorsignal entweder direkt an das Zentralgerät 18 oder über ein vorgeschaltetes Stromsensormodul 40 indirekt an das Zentralgerät 18 sendet.

Bei den Stromsensormodulen 40 der Anschlussfelder 50b und 50d, wobei das Anschlussfeld 50b gleichzeitig ein Einspeisefeld ist und das Anschlussfeld 50d gleichzeitig ein Kuppelungsfeld ist, wird das verarbeitete Sensorsignal zuerst an das jeweils vorgeschaltete Stromsensormodul 40 des Schaltfelds 48a bzw. des Anschlussfelds 50b gesendet, während das Stromsensormodul 40 im Schaltfeld 48a direkt mit dem Zentralgerät 18 verbunden ist und das verarbeitete Sensorsignal direkt an das Zentralgerät 18 weiterleiten kann.

Das jeweilige Zentralgerät 18 verarbeitet das verarbeitete Sensorsignal und steuert ein oder mehrere Leistungsschalter 20 über die entsprechenden Auslöseleitungen 42 an, sofern dies notwendig ist.

Beim Verarbeiten innerhalb des Zentralgeräts 18 wird geprüft, ob weitere Sensorsignale von anderen Sensoren 14 aus demselben Anschlussfeld 50 und/oder Schaltfeld 48 vorliegen, also aus demselben Sammelschienenabschnitt 60 bzw. derselben Schutzzone, beispielsweise von den Lichtsensoren 32.

In dem Schaltfeld 48 beispielsweise ist neben einem Stromsensor 34 auch ein Lichtsensor 32 angeordnet, der das von einem Störlichtbogen ausgestrahlte Licht misst und ebenfalls ein Sensorsignal an das zugehörige Lichtsensormodul 38 sendet, welches wiederum das Sensorsignal in ein verarbeitetes Sensorsignal umwandelt und an das Zentralgerät 18 sendet.

Bei einem Störlichtbogenereignis im Schaltfeld 48 liegen dem Zentralgerät 18 daraufhin zwei unabhängig voneinander gesendete Sensorsignale vor, die ausgewertet werden.

Grundsätzlich sind zwei Bus-Systeme vorhanden, da vorliegend die Lichtsensoren 32 mit den zugeordneten Lichtsensormodulen 38 über die abgezweigte Bus-Verbindung 23 kommunizieren und die Lichtsensormodulen 38 über die zentrale Bus-Verbindung 22 mit dem Zentralgerät 18 kommunizieren. Die Lichtsensormodule 38 sind also in beiden Bus-System eingebunden, weswegen diese als Buskoppler fungieren.

Anstatt der als Lichtsensoren 32 ausgebildeten Sensoren 14 können auch Drucksensoren oder Temperatursensoren als Sensoren 14 vorgesehen sein. Die Sensormodule 16 sind dann entsprechend ausgebildet.

Nachdem das Zentralgerät 18 die verschiedenen verarbeiteten Sensorsignale ausgewertet hat, erzeugt es ein Auslösesignal und leitet dieses an ein oder mehrere Leistungsschalter 20 weiter.

In dem Störlichtbogenschutzsystem 10 der Figur 3 sind nur Leistungsschalter 20 vorgesehen. Die Leistungsschalter 20 befinden sich jeweils zwischen den Einspeiseschaltern 64 und dem jeweiligen Sammelschienenabschnitt 60 oder in räumlicher Nähe zum Kuppelschalter 62.

Insgesamt weist das Störlichtbogenschutzsystem 10 vier Leistungsschalter 20, insbesondere Niederspannungs-Leistungsschalter auf.

Jeder Leistungsschalter 20 ist ebenfalls einem der beiden Zentralgeräte 18a, 18b zugeordnet, mit Ausnahme des Leistungsschalters 20 am Kuppelschalter 62, welcher beiden Zentralgeräten 18a, 18b zugeordnet ist und von beiden Zentralgeräten 18a, 18b angesteuert werden kann.

Tritt in der Schaltanlage 12 der Figur 3 ein Störlichtbogen in dem Schaltfeld 48 oder in einem der Anschlussfelder 50a bis 50d auf, so steuert das Zentralgerät 18a mindestens einen der Leistungsschalter 20 des Schaltfelds 48 oder des Anschlussfelds 50b und/oder 50d an, insbesondere werden alle Leistungsschalter 20 des Sammelschienenabschnitts 60 angesteuert. Im Optimalfall werden darüber hinaus auch die beiden Einspeiseschalter 64, insbesondere die Mittelspannungs-Leistungsschalter, angesteuert und so der störlichtbogenbehaftete Sammelschienenabschnitt 60 zur Fehlerlokalisation freigeschaltet.

Der Leistungsschalter 20 des zweiten Schaltfelds 48b im Bild rechts dargestellt wird hingegen nicht angesteuert, sodass der rechte Teil der Schaltanlage 12 weiterhin mit Spannung versorgt wird, er also nicht abgeschaltet wird.

Der in der Figur 5 dargestellte Aufbau eines Störlichtbogenschutzsystems 10 entspricht im Wesentlichen dem des in Figur 3 dargestellten Störlichtbogenschutzsystems 10.

Der einzige Unterschied zwischen den Störlichtbogenschutzsystemen 10 ist, dass das Störlichtbogenschutzsystem 10 der Figur 5 neben insgesamt vier Leistungsschaltern 20, insbesondere Niederspannungs-Leistungsschalter, zusätzlich noch zwei Sätze bzw. Paare Löschgeräte 46 aufweist, die in zwei weiteren Anschlussfeldern 50a und 50i angeordnet sind.

Die beiden zusätzlichen Sätze bzw. Paare an Löschgeräten 46 können selbstverständlich auch in einem der Schaltfelder 48a, 48b oder der anderen Anschlussfelder 50 eingebaut werden, sodass sich das Störlichtbogenschutzsystem 10 der Figur 5 wie das Störlichtbogenschutzsystem 10 der Figur 3 nur über insgesamt neun Felder 47 erstrecken würde bzw. das System 8, insbesondere die Schaltanlage 12, nur insgesamt neun Felder 47 aufweisen würde.

Wie bei dem Störlichtbogenschutzsystem 10, das in Figur 3 dargestellt ist, werden auch bei dem Störlichtbogenschutzsystem 10 der Figur 5 ein oder mehrere Sensorsignale erzeugt und an das Zentralgerät 18 weitergeleitet.

Das Zentralgerät 18 kann, wenn ein tatsächliches Störlichtbogenereignis vorliegt, zwei verschiedene Auslösesignale erzeugen, wovon eines an die Löschgeräte 46 gerichtet ist und ein zweites an die Leistungsschalter 20 adressiert ist.

Alternativ kann ein Auslösesignal über eine Bus-Verbindung 22 an die Löschgeräte 46 ausgegeben werden, die Teil des Bus-Systems sind, wobei die Löschgeräte 46 dann den Leistungsschalter 20 über die Auslöseleitung 42 ansteuern. Das Auslösesignal wird also über eine Bus-Verbindung 22 an das Löschgerät 46 gesendet und von dort aus weiter an den Leistungsschalter 20 geleitet.

Das Löschgerät 46 erzeugt im Wesentlichen 1 ms nach Erhalten des für ihn bestimmten Auslösesignals einem Kurzschluss zwischen zwei der drei Sammelschienen 36 des Sammelschienenabschnitts 60 und löscht so den dort vorliegenden Störlichtbogen, während nachgeschaltet die Leistungsschalter 20 die Leistungszufuhr des gesamten Sammelschienenabschnitts 60 unterbrechen und sicherstellen, dass zumindest dem Teil der Schaltanlage 12 kein Strom mehr zugeführt wird.

Die Löschdauer des Störlichtbogenschutzsystems 10 der Figur 5 beträgt daher insgesamt weniger als 2 ms insgesamt, während die Löschdauer des Störlichtbogenschutzsystems 10 der Figur 3, das keine Löschgeräte 46 aufweist, zwischen 50 ms und 75 ms liegt.

Für die schnelle Löschdauer kann es ausreichend sein, dass das Störlichtbogenschutzsystem 10 nur insgesamt einen Satz bzw. ein Paar Löschgeräte 46 pro Sammelschienenabschnitt 60 aufweist. Vorteilhafterweise weist das Störlichtbogenschutzsystem 10 eines Dehnstromsystems jedoch mindestens zwei Löschgeräte 46 auf, die zwischen verschiedenen Außenleitern angeordnet sind.

In den Figuren 6 bis 13 sind die einzelnen Komponenten des Störlichtbogenschutzsystems 10 einzeln dargestellt.

Alle Komponenten und elektronischen Erfassungsgeräte sind mit ihren Rückseiten auf Hutschienen im Inneren der Schaltanlage 12 montierbar.

Darüber hinaus weisen alle Komponenten bzw. elektronischen Erfassungsgeräte ein Gehäuse auf, das aus einem Metall gebildet ist. Mit einem Gehäuse aus einem Metall lässt sich die elektromagnetische Verträglichkeit bzw. die EMV-Stabilität der einzelnen Komponenten verbessern.

Auch sind die Komponenten, bis auf die Stromsensoren 34, über Bus-Verbindungen 22, 23 kommunikativ anbindbar, sodass diese Komponenten sowohl Informationen senden als auch Informationen empfangen können. Ein bidirektionaler Informationsaustausch innerhalb des gesamten Störlichtbogenschutzsystems 10 ist durch die jeweilige Bus-Verbindung 22, 23 möglich.

Die jeweilige Bus-Verbindung 22, 23 wird in Form von einer Steckverbindung bzw. einer Schraubverbindung realisiert, wobei die jeweilige Bus-Verbindung 22, 23 zwei M8- oder M12-Stecker aufweist, die in die jeweiligen Anschlüsse 24, 26, 28 steckbar aufgenommen werden können.

Über die Bus-Verbindungen 22, 23 werden zusätzlich alle Komponenten, bis auf die Stromsensoren 34 von dem Zentralgerät 18 und/oder dem Relaismodul 44, mit Spannung versorgt, sodass ein separater Spannungsanschluss entfallen kann. Das Zentralgerät 18 und/oder das Relaismodul 44 sind bzw. ist mit dem Netzanschluss 52 verbunden, wie vorstehend schon erläutert.

Auf einer Vorderseite 66 der Komponenten befindet sich mindestens ein Anzeigeelement 54, das beispielsweise eine LED hat. Über diese LED kann der aktuelle Status der jeweiligen Komponente wiedergegeben werden. Dies kann durch eine einzelne LED realisiert werden, die abhängig vom jeweiligen Status unterschiedlich farbig oder mit einer unterschiedlichen Intensität leuchtet. Auch können mehrere LEDs vorgesehen sein, über die insbesondere gleichzeitig mehrere Status angezeigt werden können.

Ebenfalls auf der Vorderseite 66 der jeweiligen Komponente ist ein Bedienelement 68 in Form einer Taste vorgesehen. Über dieses Bedienelement 68 kann ein Benutzer dem Zentralgerät 18 die aktuelle Position mitteilen, genauer gesagt das aktuelle Schaltfeld 48 bzw. Anschlussfeld 50 der Schaltanlage 12, in dem sich der Sensor 14, das Sensormodul 16 oder das Löschgerät 46 des Störlichtbogenschutzsystems 10 befindet. Darüber hinaus kann auch die Position eines Sensors 14 innerhalb einer Reihenschaltung von mehreren Sensoren 14 an das Zentralgerät 18 übermittelt werden. Das Bedienelement 68 eignet sich ebenfalls dazu, den Status der jeweiligen Komponente zu verändern und diese so beispielsweise von einem in den anderen Status zu überführen.

Dies kann in einfacher Weise durch mehrmaliges Betätigen des Bedienelements 68 erfolgen, wobei die Anzahl der entsprechenden Position der Komponente entspricht, insbesondere in Bezug auf die Bus-Verbindung 22, 23.

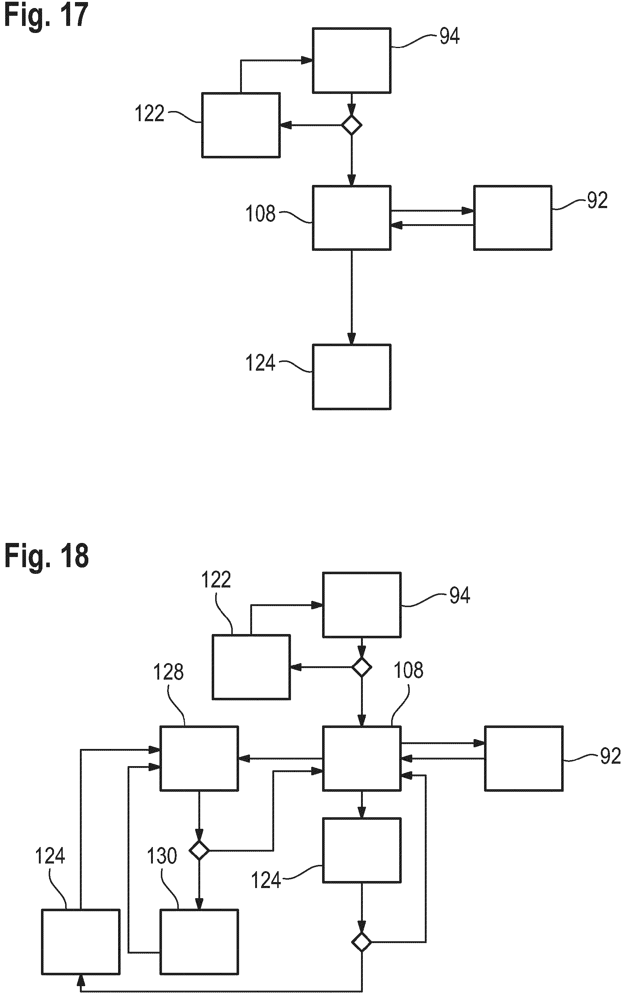

Die Komponenten sind darüber hinaus in der Lage, ihre eigene Funktionalität, die zugeordnete Bus-Verbindung 22, 23, die interne Temperatur sowie die interne Betriebsspannung zu überwachen. Der genaue Ablauf der Funktionsüberwachung im Rahmen eines Testmodus wird näher in den Figuren 17 bis 20 erläutert.

Figur 6 zeigt den genauen Aufbau eines Punktsensors als Beispiel für einen Lichtsensor 32.

Der Lichtsensor 32 ist mit seiner Rückseite auf einem Lochprofil mit 25 mm Lochraster montierbar.

Der Lichtsensor 32 ist dazu eingerichtet Licht zu detektieren. Insbesondere detektiert er Licht mit einer Intensität von 8000Lux und ist unempfindlich gegenüber Umgebungslicht mit einer Intensität von bis zu 2000 Lux, insbesondere von bis zu 5000 Lux. Der Detektionsradius des als Punktsensors ausgebildeten Lichtsensors 32 liegt bei mindestens 90°, insbesondere zwischen 90° und 180°.

Detektiert der Lichtsensor 32 ein Licht mit der entsprechenden Intensität, insbesondere einer Lichtintensität, die oberhalb eines festgesetzten Schwellenwerts liegt, sendet er ein Sensorsignal an das Lichtsensormodul 38, welches in Figur 7 gezeigt ist.

Der Lichtsensor 32 weist insgesamt zwei Sensoranschlüsse 24a und 24b auf. Über den Sensoranschluss 24a kann der Lichtsensor 32 mit einem weiteren Lichtsensor 32 oder dem Lichtsensormodul 38 verbunden werden. Über den zweiten Sensoranschluss 24b kann der Lichtsensor 32 entweder mit einem weiteren Lichtsensor 32 oder einem Abschluss 51 verbunden werden.

Unterhalb des Sensoranschlusses 24a befindet sich insgesamt vier Anzeigeelemente 54 in Form von LEDs. Mit Hilfe der Anzeigeelemente 54 kann auch visuell ausgegeben werden, dass der Sensor 14 ein Sensorsignal detektiert hat, das durch einen Störlichtbogen ausgelöst wurde, sodass nach dem Störlichtbogenereignis anhand des Sensors 14 mit seinen Anzeigeelementen 54 der Entstehungsort des Störlichtbogens lokalisiert werden kann. Detektiert ein Sensor 14 einen störlichtbogenrelevanten Parameter dann wechselt sein Anzeigeelement 54 beispielsweise die Farbe, sodass eindeutig bestimmbar ist, dass der Sensor 14 einen störlichtbogenrelevanten Parameter detektiert hat.

In einem unteren Bereich, bei dem Sensoranschluss 24b befindet sich das als Taste ausgebildete Bedienelement 68.

In einem mittleren Bereich, zwischen dem oberen und dem unteren Bereich ist der eigentliche messende Photodetektor 70 angeordnet, mit dem die Lichtintensität der Umgebung gemessen wird. Dem Photodetektor 70 kann eine (Sammel-)Linse zugeordnet sein, um den Detektionsbereich des Lichtsensors 32 zu vergrößern.

Figur 7 zeigt das Punktlichtsensormodul, an das mindestens ein Punktlichtsensor der Figur 6 angeschlossen werden kann.

Das Lichtsensormodul 38 weist in einem oberen Bereich auf der Vorderseite 66 zwei Sensormodulanschlüsse 26a auf, mit denen es über Bus-Verbindungen 23 entweder mit zwei weiteren Sensormodulen 16 oder einem Sensormodul 16 und dem Zentralgerät 18 und/oder dem Relaismodul 44 verbunden werden kann.

In einem unteren Bereich lässt sich über einen einzigen Sensormodulanschluss 26b ein einziger Lichtsensor 32 über eine Bus-Verbindung 23 anschließen.

An einem einzigen Punktlichtsensormodul können dabei bis zu vier Lichtsensoren 32 hintereinander in Reihe geschaltet angeschlossen werden.

Ausgehend vom Lichtsensormodul 38 werden alle Lichtsensoren 32 über den kombinierten M8- oder M12-Stecker mit einer Versorgungsspannung versorgt.

Detektiert einer der Lichtsensoren 32 Licht, dann fungiert das Lichtsensormodul 38 als Bus-Überbrückung bzw. Buskoppler zwischen den unterschiedlichen Bus-Verbindungen 22, 23, also der abgezweigten Bus-Verbindung 23, an der alle Lichtsensoren 32 angeschlossen sind, und der zentralen Bus-Verbindung 22 zwischen den Lichtsensormodulen 38 und dem Zentralgerät 18.

Physikalisch gesehen sind die Bus-Verbindungen 22, 23 also zwei unterschiedliche Bus-Systeme, die über die Sensormodule 16 überbrückt werden bzw. miteinander verbunden werden.

Ähnlich zu dem Punktlichtsensormodul aus Figur 7 ist das Liniensensormodul der Figur 8 aufgebaut.

Der einzige Unterschied zwischen den beiden Arten von Lichtsensormodulen 38 besteht darin, dass an dem Liniensensormodul lediglich insgesamt nur ein Liniensensor über eine Steckverbindung verbunden werden kann, während an einem Punktsensormodul bis zu vier Punktsensoren in Reihe geschaltet verbunden werden können.

Der Photodetektor oder auch faseroptischer Sensor ist dabei ein schlauchförmiger Fotosensor, der eine lichtdurchlässige Ummantelung aufweist und Licht nahezu verlustfrei bis zu einer Steckverbindung an beiden seiner Enden überträgt. Übersteigt die Lichtintensität einen vordefinierten Schwellenwert, so sendet der Liniensensor 32 ein Sensorsignal an das Liniensensormodul, welches das Sensorsignal verarbeitet und weiter an das Zentralgerät 18 oder das Relaismodul 44 leitet.

Eine andere Art eines Sensors 14 ist in Figur 9 dargestellt, nämlich ein Stromsensor 34 in Form einer Rogowskispule.

Die Rogowskispule weist eine Länge von 30 bis 50 cm auf und hat einen Spulenwiderstand zwischen 300 und 2000 Ω. Die Rogowskispule misst Strom in einem Frequenzbereich (Niederfrequenzbereich) von 2 bis 1000 Hz.

Über eine Sensorleitung ist die Rogowskispule mit dem Rogowskimodul der Figur 10 verbunden.

Das Rogowskimodul der Figur 10 steht dabei stellvertretend für alle Stromsensormodule 40.

An dem Rogowskimodul können bis zu drei Rogowskispulen über Sensorleitungen direkt an drei eigenständigen Sensormodulanschlüssen 26b angeschlossen werden, die jeweils unabhängig voneinander Sensorsignale zu dem Rogowskimodul senden.

Das Rogowskimodul überwacht die Plausibilität der eingehenden Sensorsignale, genauer gesagt vergleicht das Rogowskimodul alle drei Sensorsignale miteinander. Wird beispielsweise von zwei Rogowskispulen ein Sensorsignal geschickt, von einer dritten jedoch keines, so wertet das Rogowskimodul dies aus und gibt beispielsweise über das Anzeigeelement 54 an, dass eine Rogowskispule oder die Sensorleitung zu dieser Rogowskispule defekt ist.

Das Rogowskimodul analysiert alle Sensorsignale der Rogowskispulen. Liegt ein Überstrom vor, also entspricht mindestens ein Sensorsignal einer der drei Rogowskispulen einem Strom, der zweimal so groß ist wie der Normalstrom, dann sendet das Rogowskimodul über einen der Sensoranschlüsse 26a ein verarbeitetes Sensorsignal an das Zentralgerät 18 oder das Relaismodul 44 über eine Bus-Verbindung 22. Dabei reicht es, wenn nur in einer Phase ein solcher Überstrom vorliegt.

Ein solches Relaismodul 44 ist in Figur 11 dargestellt.

Das Relaismodul 44 weist bis zu zwei Bus-Anschlüsse 72 auf, über die es mit Bus-Verbindungen 22 mit einem Lichtsensormodul 38 und/oder einem Stromsensormodul 40 und/oder einem Zentralgerät 18 verbunden werden kann.

Das Relaismodul 44 verfügt über einen Schließerkontakt 74 und einen Wechslerkontakt 76. Beides sind mechanische Schalter, die gegebenenfalls einen elektrischen Kontakt öffnen oder schließen. Die Schaltgeschwindigkeit des (mechanischen) Relaismoduls 44 beträgt dabei 5-7 ms, um von einem Schaltzustand in einen anderen Schaltzustand zu wechseln.

An dem Schließerkontakt 74 ist üblicherweise ein Leistungsschalter 20 angebunden. Im Normalfall ist der Schließerkontakt 74 geöffnet, sodass kein Strom über den Kontakt fließen kann. Liegt ein Auslösesignal vor, dann schließt der Schließerkontakt 74 und führt zum Bestromen eines Arbeitsstromauslösers des Leistungsschalters 20, was letztendlich zum Auslösen des Leistungsschalters 20 und dem Unterbrechen der Spannungsversorgung für den vom Störlichtbogen betroffenen Teil der Schaltanlage 12 führt.

An dem Wechslerkontakt 76 sind üblicherweise zwei Anzeigeelemente 54 angeschlossen. Im Normalfall steht der Wechslerkontakt 76 in einer Position, in der eines der beiden Anzeigeelemente 54 bestromt wird und leuchtet. Liegt ein Auslösesignal vor, dann wechselt die Position des Wechslerkontakts 76, sodass nun das andere der beiden Anzeigeelemente 54 bestromt wird. Dadurch ist für einen Benutzer nach einem Störlichtbogenereignis auf den ersten Blick erkennbar, dass ein Auslösesignal vorlag.

Darüber hinaus kann an das Relaismodul 44 auch ein akustisches Ausgabegerät wie eine Hupe oder Sirene über den Schließerkontakt 74 oder den Wechslerkontakt 76 angeschlossen sein, die durch das Relaismodul 44 bestromt wird, sobald dieses ein Auslösesignal empfangen hat.

Die Spannungsversorgung des Relaismodul 44 kann zusätzlich zu der Versorgung über die Bus-Verbindung 22 auch über eine separate 24 V Push-in Klemme realisiert werden.

Alternativ zu dem Relaismodul 44 kann ein verarbeitetes Sensorsignal von einem Sensormodul 16 auch an das Zentralgerät 18, wie es in den beiden Figuren 12a und 12b schematisch dargestellt ist, gesendet werden.

Das in der Figur 12a dargestellte Zentralgerät 18 weist drei Zentralgeräteanschlüsse 28a, 28b und 28c auf, die als Bus-Anschlüsse ausgebildet sind und an die jeweils beispielsweise ein Stromsensormodul 40 (am Zentralgeräteanschluss 28a), ein Lichtsensormodul 38 (am Zentralgeräteanschluss 28b) sowie ein Leistungsschalter 20 oder ein Relaismodul 44 (am Zentralgeräteanschluss 28c) angeschlossen werden kann.

An jedem Zentralgeräteanschluss 28 kann ein Sensormodul 16 bzw. oder Relaismodul 44 angeschlossen werden, also eine über eine Bus-Verbindung 22 anschließbare Komponente des Störlichtbogenschutzsystems 10.

Das Zentralgerät 18 fungiert dabei als Entscheidungsträger. Werden Licht, Druck, Temperatur und/oder Strom in einem gewissen Zeitfenster detektiert, liegt also ein verarbeitetes Sensorsignal über ein gewisses Zeitfenster an dem Zentralgerät 18 an, sendet es ein Auslösesignal an mindestens ein Löschgerät 46, einen Leistungsschalter 20 und/oder ein Relaismodul 44 und veranlasst so die Unterbrechung der Spannungsversorgung zumindest eines Teils der Schaltanlage 12.

Das Zentralgerät 18 verfügt über einen separaten Spannungsanschluss 78 und kann darüber mit einem Netzanschluss 52 verbunden werden. Daher kann das Zentralgerät 18 auch als Energiehub fungieren. Ausgehend vom Zentralgerät 18 werden alle anderen Komponenten des Störlichtbogenschutzsystems 10 mit Spannung versorgt.

Über einen Datenanschluss 80 ist das Zentralgerät 18 mit einer Anzeigeeinheit 56 wie einem Display verbindbar.

Ein weiterer Anschluss 82 des Zentralgeräts 18, entweder eine Feldbus bzw. Ethernet-Schnittstelle oder eine serielle Schnittstelle, insbesondere eine Modbus/TCP oder eine ModbusRTU Schnittstelle dient beispielsweise dazu, das Zentralgerät 18 mit einem externen Leitsystem zu verbinden.

Über diesen weiteren Anschluss 82 kann das Zentralgerät 18 wichtige Informationen an das übergeordnete Leitsystem weitergeben. Über den weiteren Anschluss 82 können dazu Daten von dem Zentralgerät 18 nach außen gesendet werden.

Es ist allerdings beispielsweise nicht möglich, dass das Zentralgerät 18 über den weiteren Anschluss 82, abgesehen von einer aktuellen Zeitangabe, Daten vom externen Leitsystem empfängt. Das verbessert die Sicherheit des gesamten Störlichtbogenschutzsystems 10, da ein Zugriff von außerhalb auf das Störlichtbogenschutzsystem 10 nicht möglich ist.

Das Zentralgerät 18 hat noch weitere Funktionen und Aufgaben, die bei der Installation, dem Betrieb und der Wartung des Störlichtbogenschutzsystems 10 essentiell sind.

Das Zentralgerät 18 kann über die Bus-Verbindungen 22, 23 alle Komponenten des Störlichtbogenschutzsystems 10 abfragen und dadurch feststellen, welche Komponenten das Störlichtbogenschutzsystem 10 aufweist. Dabei kann das Zentralgerät 18 auch feststellen, ob ausschließlich Leistungsschalter 20 vorliegen und das Störlichtbogenschutzsystem 10 dadurch eine längere Löschdauer aufweist, oder ob auch Löschgeräte 46 verbaut sind, sodass die Löschdauer deutlich geringer ist.

Das Zentralgerät 18 ist also in der Lage, die Art und Anzahl der im Störlichtbogenschutzsystem 10 eingebauten Leistungsschalter 20 und/oder Löschgeräte 46 zu erkennen, vorausgesetzt, es besteht eine Kommunikation zwischen dem Zentralgerät 18 und dem Löschgerät 46. Sofern ein Relaismodul verwendet wird, ist die entsprechende Funktionalität typischerweise nicht gegeben.

Diese Informationen hinsichtlich der Systemkonfiguration kann es in dem, mit dem Zentralgerät 18 verbundenen Speicher 59 abspeichern.

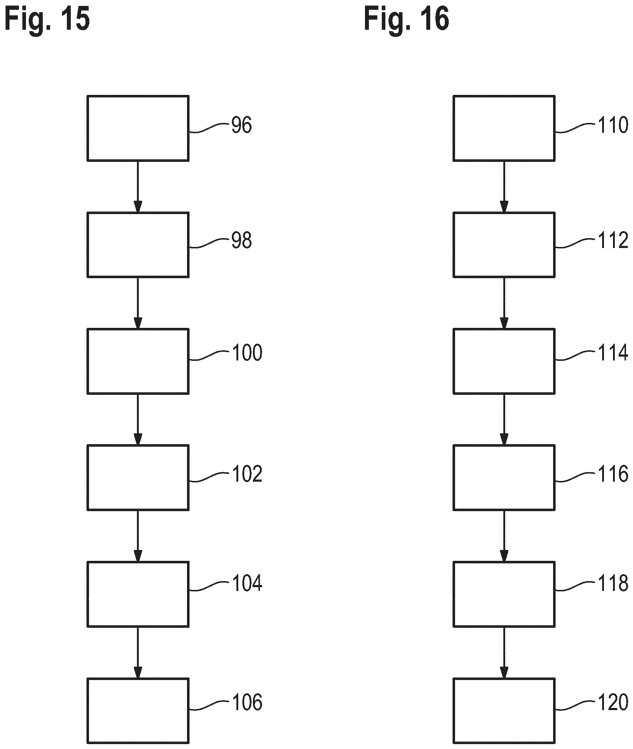

Ausgehend von der erkannten Systemkonfiguration kann das Zentralgerät 18 eine Initialisierung des gesamten Störlichtbogenschutzsystems 10 vornehmen, was nachfolgend anhand der Figur 15 noch näher erläutert wird.

Das Zentralgerät 18 kann zudem die Position bzw. den Installationsort der einzelnen Komponenten des Störlichtbogenschutzsystems 10 abfragen, was durch Betätigen des jeweiligen Bedienelements 68 ermöglicht wird. Hierdurch kann das Zentralgerät 18 feststellen, welche Komponente des Störlichtbogenschutzsystems 10 in welchem Schaltfeld 48 bzw. Anschlussfeld 50 der Schaltanlage 12 angeordnet ist. Auch diese Informationen zur Systemkonfiguration kann das Zentralgerät 18 im Speicher 59 speichern.

Beispielsweise wird das Zentralgerät 18 über sein Bedienelement 68 in einen entsprechenden Modus versetzt, in dem die Daten abgespeichert werden können. Die jeweils anderen Komponenten des Störlichtbogenschutzsystems 10 können dann ebenfalls über ihr jeweiliges Bedienelement 68 die gewünschten Informationen übermitteln, beispielsweise den Ort der Installation im Störlichtbogenschutzsystem 10.

Während des Betriebs des Störlichtbogenschutzsystems 10 fragt das Zentralgerät 18 alle Komponenten zyklisch ab und prüft deren Betriebszustand und stellt dadurch fest, ob noch alle Komponenten des Störlichtbogenschutzsystems 10 ordnungsgemäß funktionieren. Ist dies nicht der Fall, so gibt das Zentralgerät 18 über das Anzeigeelement 54 oder die Anzeigeeinheit 56 eine Fehlermeldung aus.

Durch das zyklische Abfragen des Betriebszustands der Komponenten erkennt das Zentralgerät 18 auch Änderungen in der Systemkonfiguration. Jede solche Änderung wird mit einem Zeitstempel versehen und ebenfalls in dem Speicher 59 abgespeichert.

Auch ein falsches Anschließen eines Sensors 14, eines Sensormoduls 16 und/oder eines Löschgeräts 46 kann das Zentralgerät 18 erkennen.

Neben den Informationen, die den Betriebszustand und die Systemkonfiguration betreffen, speichert das Zentralgerät 18 auch jedes empfangene verarbeitete Sensorsignal und jedes gesendete Auslösesignal, also jede systemrelevante Information mit einem Zeitstempel im Speicher 59 ab. Dabei werden vor allem Informationen zum Zeitpunkt, zum Ort, also dem Feld 47 der Schaltanlage 12 sowie zur Art des Signals, also wurde Licht oder Strom von den Sensoren 14 detektiert und wann und wo wurde ein Löschgerät 46 oder ein Relaismodul 44 angesteuert im Speicher 59 gespeichert. So lässt sich nach einem Störlichtbogenereignis nachvollziehen, wo in der Schaltanlage 12 dieser entstanden ist.

Zum Löschen des Störlichtbogens wird ein Auslösesignal vom Zentralgerät 18 an den/die Leistungsschalter 20, die Löschgeräte 46 und/oder das Relaismodul 44 gesendet.

Alternativ dazu kann das Zentralgerät 18 auch ein Relaismodul 44 mit zwei Schließerkontakten 74 und einem Wechslerkontakt 76 umfassen. Über den Schließerkontakt 74 wird, ähnlich wie bei dem Relaismodul 44 ein Arbeitsstromauslöser eines Leistungsschalters 20 bestromt, sodass der Leistungsschalter 20 die Spannungsversorgung der Schaltanlage 12 unterbricht.

Das in der Figur 13 dargestellte Löschgerät 46 ist über zwei Löschgeräteanschlüsse 36 mit zwei Außenleitern der Sammelschienenabschnitte 60 elektrisch leitfähig verbindbar. Um einen dreiphasigen Kurzschluss einzuleiten, wird in einem Drehstromsystem ein weiteres Löschgerät 46 benötigt, um auch den dritten Außenleiter einzubinden, also ein Paar an Löschgeräten 46.

Dazu weisen die Löschgeräte 46 einen Schließerkontakt 74 auf, der, sobald ein Auslösesignal vorliegt, geschlossen wird und einen Kurzschluss zwischen den beiden Löschgeräteanschlüssen 36 erzeugt. Dadurch wird der Störlichtbogen gelöscht. Der Schließerkontakt 74 kann auch als Hauptkontakt des Löschgeräts 46 bezeichnet werden.

Das Löschgerät 46 macht den Gerätezustand durch einen Hilfskontakt 30a oder ähnliches fremdverfügbar, um eine elektrische Verriegelung mit einem vorgeordneten Kurzschlussschutzgerät (in der Regel der/die einspeisende/n Leistungsschalter) zu ermöglichen. Darüber hinaus weist das Löschgerät 46 eine erhöhte Stoßspannungsfestigkeit von mindestens 8 kV, insbesondere von 12 kV auf. Das Löschgerät 46 wird über die Bus-Anschlüsse 30b unter anderem mit Spannung versorgt.

Ist das Löschgerät 46 mit weiteren Leistungsschaltern 20 verbunden, so leitet er das Auslösesignal, das er vom Zentralgerät 18 erhalten hat, an die jeweiligen Leistungsschalter 20 weiter, sodass die Leistungsschalter 20 auslösen.

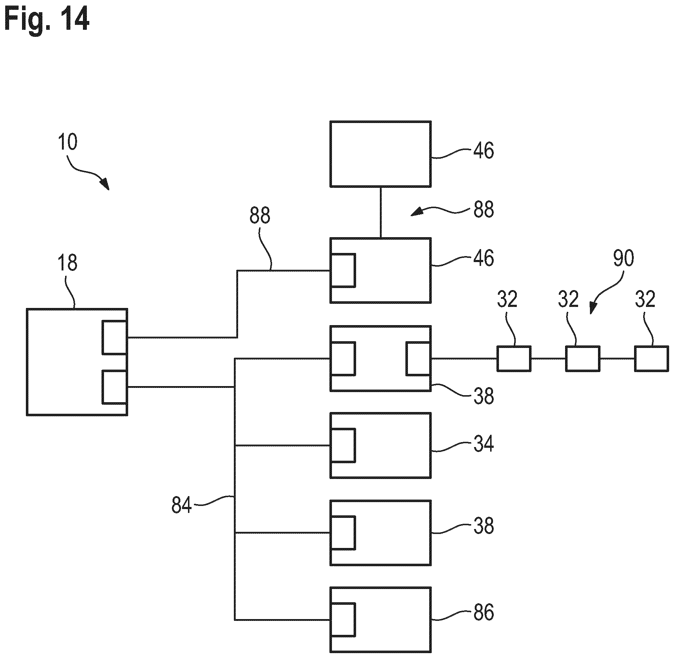

Figur 14 zeigt beispielhaft, wie die einzelnen Bus-Verbindungen 22, 23 des Störlichtbogenschutzsystems 10 insgesamt drei verschiedene Bus-Systeme ausbilden können. Die in den Bus-Systemen eingebundenen Komponenten des Störlichtbogenschutzsystems 10 entsprechen den Komponenten, die dem Zentralgerät 18 auf verschiedenen Feldern 47 der Schaltanlage 12 zugeordnet sind.

Mit anderen Worten sind nur die Komponenten in die Bus-Systeme eingebunden, die dem Zentralgerät 18 zugeordnet sind. Alle anderen Komponenten des Störlichtbogenschutzsystems 10, die einem anderen Zentralgerät 18 zugeordnet sind, bilden mit diesem eigene Bus-Systeme aus.

Ein erstes Bus-System ist das Haupt-Bus-System 84 (auch zentrales Bus-System genannt), das zwischen dem Zentralgerät 18 und den Sensormodulen 16 gebildet ist, also die zentrale Bus-Verbindung 22 umfasst. Es schließt alle Sensormodule 16 darin ein, also unter anderem die beiden Arten von Lichtsensormodulen 38, alle Stromsensormodule 40 und alle Temperatursensormodule 86.

Über das Haupt-Bus-System 84 findet die gesamte Kommunikation zwischen dem Zentralgerät 18 und den darin eingebundenen Sensormodulen 16 statt. In dem Haupt-Bus-System 84 können mindestens 32 einzelne Komponenten eingebunden sein, insbesondere sogar mindestens 64 einzelne Komponenten.

Zudem ist ein Löschgeräte-Bus-System 88 vorgesehen, welches ein Löschgeräte-Netzwerk darstellt, das aus Sicherheitsgründen separat vom Haupt-Bus-System 84 ausgebildet ist. Im Löschgeräte-Bus-System 88 sind alle Löschgeräte 46 eingebunden. Vorliegend ist beispielhaft das zweite Löschgerät 46 gezeigt, welches mit dem ersten Löschgerät 46 in Reihe geschaltet ist und ebenfalls Teil des Löschgeräte-Bus-Systems 88 ist.

Grundsätzlich verbindet das Zentralgerät 18 das Haupt-Bus-System 84 mit dem Löschgeräte-Bus-System 88 und dient daher als Bus-Überbrückung für diese beiden Bus-Systeme 84, 88.

Ferner sind mehrere zweite Bus-Systeme 90 (auch abgezweigte Bus-Systeme genannt) vorgesehen, die die abgezweigten Bus-Verbindungen 23 umfassen. Diese zweiten bzw. abgezweigten Bus-Systeme 90 zeichnen sich dadurch aus, dass ihr jeweiliger Ursprung ein Sensormodul 16 ist.

Unter das zweite bzw. abgezweigte Bus-System 90 fallen also all die Bus-Verbindungen 23, die von einem Sensormodul 16 zu den Sensoren 14 ausgehen. Dieses jeweilige zweite bzw. abgezweigte Bus-System 90 stellt daher ein eigenes Sensor-Netzwerk dar.

Beispielhaft ist gezeigt, dass drei Lichtsensoren 32 jeweils ein zweites bzw. abgezweigtes Bus-System 90 ausbilden, welches vom Lichtsensormodul 38 abzweigt. Dieses zweite bzw. abgezweigte Bus-System 90 kann maximal vier Punktsensoren 32 aufweisen, die mit dem einen Punktsensormodul 38 kommunizieren können.

Das Punktsensormodul 38 dient als Bus-Koppler zwischen dem Haupt-Bus-System 84 und dem zweiten Bus-System 90.

Es ist problemlos möglich, weitere Sensoren 14 oder Löschgeräte 46 in das jeweilige Bus-System 88, 90 einzubinden. Genauso lassen sich weitere Sensormodule 16 in das Haupt-Bus-System 84 einbinden.

Damit die einzelnen Komponenten erfolgreich miteinander kommunizieren können ist es notwendig, dass jede Komponente eine eindeutige Identifikation, beispielsweise eine Identifikationsnummer, zugeteilt bekommt. Nur über diese Identifikation kann sichergestellt werden, dass die Informationen, die von einer Komponente ausgesendet werden, der Zielkomponente über die Bus-Verbindungen 22, 23 zugestellt werden können und diese nachvollziehen kann, woher diese Informationen stammen.

Konkret bedeutet das, dass zumindest das Zentralgerät 18 immer wissen muss, von welcher Komponente es die Information erhalten hat. Dadurch kann auch nach einem Störlichtbogenereignis nachvollzogen werden, wo dieses stattgefunden hat und welche Komponenten des Störlichtbogenschutzsystems 10 und ggf. welche Teile der Schaltanlage 12 beschädigt wurden und ausgetauscht werden müssen.

Dazu vergibt das Zentralgerät 18, wie bereits erläutert, jeder Komponente während eines Konfigurations- und Initialisierungsverfahrens unter anderem eine solche eindeutige Identifikation, beispielsweise in Form einer Identifikationsnummer. Dabei muss sich jede Komponente in einem Konfigurationsmodus 92 oder einem Initialisierungsmodus 94 befinden, wie es auch für jede Komponente einzeln in den Figuren 17 bis 20 dargestellt ist.

Vorzugsweise erfolgt dieses Konfigurationsverfahren, wie es in Figur 15 gezeigt ist, bereits bevor das Störlichtbogenschutzsystem 10 in einer Schaltanlage 12 installiert wird. Das Störlichtbogenschutzsystem 10 ist somit bereits vor dem Einbau in eine Schaltanlage 12 (vor-)konfiguriert.

Zur Konfiguration wird in einem ersten Konfigurationsschritt 96 ein Schaltfeld 48 mit einem Anschlussfeld 50 über eine Bus-Verbindung 22 verbunden, also die den Feldern 47 zugeordneten Komponenten des Störlichtbogenschutzsystems 10. Genauer gesagt wird das Sensormodul 16 des Schaltfelds 48 mit dem Sensormodul 16 des Anschlussfelds 50 über eine Bus-Verbindung 22 verbunden.

In einem zweiten Konfigurationsschritt 98 wird das Zentralgerät 18 des Schaltfelds 48 mit einem Eingabe- und Anzeigegerät wie einem Computer verbunden.

In einem dritten Konfigurationsschritt 100 wird anschließend über das Eingabe- und Anzeigegerät eine eindeutige Identifikation, beispielsweise eine Identifikationsnummer, für jeden Sensor 14 und jedes Sensormodul 16 vergeben und diese Identifikation an das Zentralgerät 18 übermittelt. Unter anderem kann anhand der Identifikation jede Komponente des Störlichtbogenschutzsystems 10 feststellen, ob die empfangene Nachricht für sie bestimmt ist oder nicht. Es lässt sich damit eine inhaltsbezogene Adressierung herstellen.

In einem vierten Konfigurationsschritt 102 wird die Position des mindestens einen Sensors 14 und/oder des mindestens einen Sensormoduls 16 des Felds 47 der Schaltanlage 12, also des Schaltfelds 48 der Schaltanlage 12 bzw. des Anschlussfelds 50 der Schaltanlage 12, bestimmt und ebenfalls an das Zentralgerät 18 übermittelt. Dazu kann das angeschlossene Eingabe- und Anzeigegerät verwendet werden, und/oder das auf jeder Komponente angebrachte Bedienelement 68. Beispielsweise abhängig von der Anzahl und/oder der Dauer der Betätigung des Bedienelements 68 kann dem Zentralgerät 18 die Position der Komponente eindeutig mitgeteilt werden.

In einem fünften Konfigurationsschritt 104 kann das Störlichtbogenschutzsystem 10 in der Schaltanlage 12 in Betrieb genommen werden.

Es kann vorgesehen sein, dass das Störlichtbogenschutzsystem 10 bereits vor der Konfiguration in der Schaltanlage 12 installiert ist, also die Konfiguration an einem bereits in der Schaltanlage 12 installierten Störlichtbogenschutzsystem 10 erfolgt.

Es ist aber auch möglich, dass das Störlichtbogenschutzsystem 10 erst nach erfolgter Konfiguration in der Schaltanlage 12 installiert wird, sodass also eine werkseitige Konfiguration des Störlichtbogenschutzsystems 10 erfolgt.

Grundsätzlich ist auch eine Konfiguration ohne angeschlossenem Eingabe- und Anzeigegerät denkbar. Dann geschieht die Konfiguration ausschließlich über die auf den Komponenten des Störlichtbogenschutzsystems 10 befindlichen Bedienelemente 68.

Nachdem das Störlichtbogenschutzsystem 10 in der Schaltanlage 12 installiert ist, können dieses jederzeit um einzelne Sensoren 14, Sensormodule 16, Löschgeräte 46, also Komponenten des Störlichtbogenschutzsystems 10, oder ganze Schaltfelder 48 und Anschlussfelder 50 der Schaltanlage 12 ergänzt werden. Die Schaltfelder 48 und Anschlussfelder 50 können dabei vorkonfektioniert sein, also mit Komponenten des Störlichtbogenschutzsystems 10 bereits versehen sein.

Dies geschieht dann in einem sechsten Konfigurationsschritt 106, wobei das Zentralgerät 18 die Identifikation eigenständig vergibt und dafür nicht mit einem Eingabe- und Anzeigegerät verbunden sein muss. Auch die Bestimmung der Position der Komponenten kann ohne ein solches Eingabe- und Anzeigegerät erfolgen, indem auf der jeweiligen Komponente ein Bedienelement 68 betätigt wird.

Ein Nachrüsten oder Tauschen einzelner Sensoren 14 oder Sensormodule 16 ist somit auch ohne eine Verbindung des Zentralgeräts 18 zu einem Eingabe- und Anzeigegerät möglich.

Ist das Störlichtbogenschutzsystem 10 erfolgreich konfiguriert und initialisiert, wodurch auch gleichzeitig alle Bus-Systeme aufgespannt sind, können alle Komponenten des Störlichtbogenschutzsystems 10 in einen Betriebsmodus 108 geschaltet werden, wobei die Komponenten in dem Betriebsmodus 108 Störlichtbögen detektieren und löschen können.

Das genaue Verfahren zum Detektieren und Löschen eines Störlichtbogens ist in Figur 16 dargestellt, worauf nachfolgend Bezug genommen wird.

In einem ersten Schritt 110 wird mindestens ein störlichtbogenrelevanter Parameter eines potenziellen Störlichtbogenereignisses, insbesondere Licht und/oder Strom, mit einem Sensor 14 detektiert und anschließend ein Sensorsignal erzeugt.

Dieses Sensorsignal wird in einem zweiten Schritt 112 weiter über eine Bus-Verbindung 23 an das Sensormodul 16 geleitet. Das Weiterleiten findet dabei über das zweite Bus-Netzwerk 88, 90 statt, welches die abgezweigte Bus-Verbindung 23 umfasst.

In einem dritten Schritt 114 wird das Sensorsignal vom Sensor 14 im Sensormodul 16 verarbeitet und das Sensormodul 16 erzeugt ein verarbeitetes Sensorsignal.

Dieses verarbeitete Sensorsignal wird in einem vierten Schritt 116 an das Zentralgerät 18 über eine Bus-Verbindung 22 im Haupt-Bus-System 84 weitergeleitet, welches die zentrale Bus-Verbindung 22 umfasst.

In einem fünften Schritt 118 wird das verarbeitete Sensorsignal von dem Zentralgerät 18 ausgewertet und ein Auslösesignal erzeugt, falls ein tatsächliches Störlichtbogenereignis vorliegt. Hierbei können weitere Sensorsignale vom Zentralgerät 18 verarbeitet und berücksichtigt werden.

Dieses Auslösesignal wird anschließend in einem optionalen sechsten Schritt 120 zu einem Löschgerät 46 gesendet, welches daraufhin den Störlichtbogen über die bereits beschriebenen Verfahren löscht.

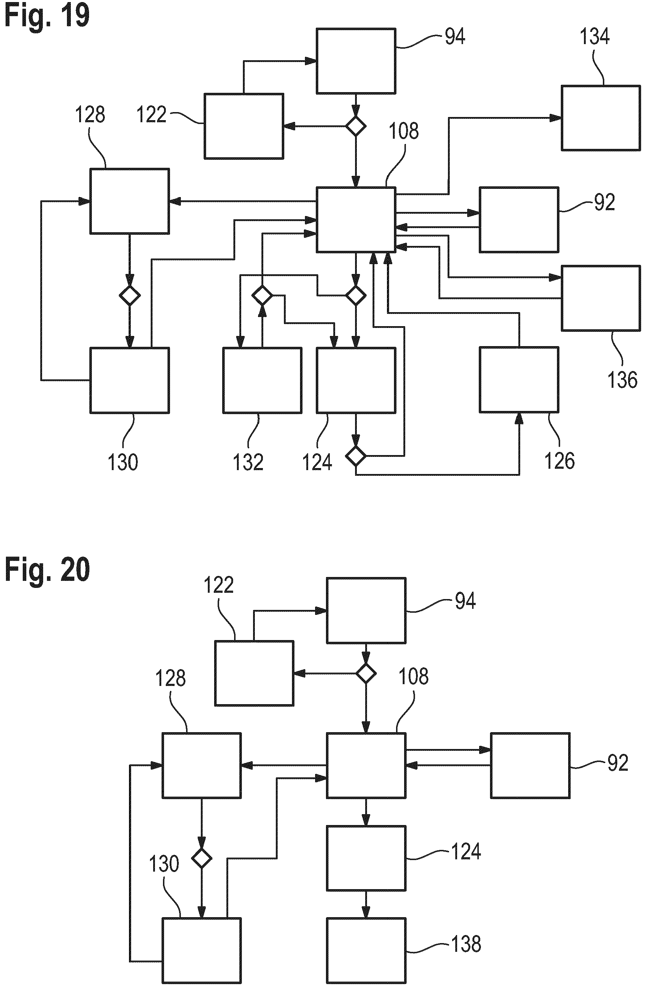

Neben dem Konfigurationsmodus 92, dem Initialisierungsmodus 94 und dem Betriebsmodus 108 können die Komponenten des Störlichtbogenschutzsystems 10 noch in weitere Modi geschaltet werden, wie es in Figur 17 für den Sensor 14, in Figur 18 für das Sensormodul 16, in Figur 19 für das Zentralgerät 18 und in Figur 20 für das Löschgerät gezeigt ist.

Vorteilhafterweise lässt sich der Modus, in dem sich die jeweilige Komponente gerade befindet über das Anzeigeelement 54 ablesen. Mit anderen Worten zeigt das Anzeigeelement 54 kontinuierlich an, in welchem Modus sich die Komponente befindet.

Jede Komponente lässt sich durch Betätigen des Bedienelements 68 für eine bestimmte Zeitdauer, insbesondere für mindestens drei Sekunden in den Konfigurationsmodus 92 versetzen. Damit kann die Position jeder Komponente beliebig oft im Störlichtbogenschutzsystem 10 verändert werden und die neue Position dem Zentralgerät 18 mitgeteilt werden.

Während des Initialisierungsmodus 94 werden den Komponenten einzeln nacheinander eindeutige Identifikationen, beispielsweise Identifikationsnummern, vom Zentralgerät 18 zugeteilt.

Wurde die Initialisierung erfolgreich durchgeführt, so wird die jeweilige Komponente automatisch in den Betriebsmodus 108 geschaltet.

War die Initialisierung nicht erfolgreich, beispielsweise, weil die Bus-Verbindung 22, 23 zwischen der Komponente und dem Zentralgerät 18 fehlerhaft ist, schaltet die Komponente in einen Zurücksetzmodus 122 und das Anzeigeelement 54 zeigt eine fehlerhafte Initialisierung an.

Von dem Zurücksetzmodus 122 gelangen die Komponenten beispielsweise mit Hilfe des Zentralgeräts 18 wieder in den Initialisierungsmodus 94 und die Initialisierung kann erneut durchgeführt werden.

Während des Initialisierungsmodus 94 und des Konfigurationsmodus 92 können die Komponenten noch keine Signale senden oder empfangen, das Störlichtbogenschutzsystem 10 ist also noch nicht einsatzbereit. Erst wenn sich zumindest ein Sensor 14, ein entsprechendes Sensormodul 16 und ein Zentralgerät 18 im Betriebsmodus 108 befinden, kann ein Störlichtbogen erkannt werden und erst, wenn zusätzlich noch mindestens ein Leistungsschalter 20 und/oder ein optionales Löschgerät 46 im Betriebsmodus 108 ist, kann dieser Störlichtbogen auch gelöscht werden.

Wie in Figur 17 dargestellt ist, wechselt ein Sensor 14, nachdem er einen störlichtbogenrelevanten Parameter detektiert hat in einen Signal-erkannt-Zustand 124 und generiert ein Sensorsignal. Parallel dazu verändert sich sein Anzeigeelement 54 und zeigt einem Benutzer an, dass ein störlichtbogenrelevanter Parameter detektiert wurde.

Wie in Figur 18 gezeigt ist, wechselt das Sensormodul 16, das ein Sensorsignal empfangen hat, ebenfalls in einen Signal-erkannt-Zustand 124 und wertet das Sensorsignal aus.

Dabei überprüft das Sensormodul 16 das Sensorsignal und vergleicht es mit einem Schwellenwert.

Liegt das Sensorsignal unterhalb des Schwellenwertes, dann schaltet das Sensormodul 16 automatisch in den Betriebsmodus 108 zurück.

Entspricht das Signal einer Lichtintensität oder einer Stromstärke oberhalb des Schwellenwerts, wird ein verarbeitetes Sensorsignal an das Zentralgerät 18 gesendet und das Sensormodul 16 wechselt in einen Signal-gesendet-Zustand 126.

In dem Signal-gesendet-Zustand 126 verändert sich auch das Anzeigeelement 54, indem sich beispielsweise die Farbe der Lampe verändert.

Um von dem Signal-gesendet-Zustand 126 wieder in den Betriebszustand 108 zu schalten, muss das Sensormodul 16 zunächst in einen Testmodus 128 geschaltet werden. Dies geschieht beispielsweise über das Betätigen des Bedienelements 68.

In dem Testmodus 128 überprüft das Sensormodul 16, ob die an ihm angeschlossenen Sensoren 14 noch funktionsfähig sind.

Sind alle Sensoren 14 noch funktionsfähig, so wechselt das Sensormodul 16 wieder in den Betriebsmodus 108.

Sind ein oder mehrere Sensoren 14 defekt und/oder deren Bus-Verbindungen 23 unterbrochen, dann wechselt das Sensormodul 16 in einen Fehlerzustand 130 und zeigt über das Anzeigeelement 54 an, dass ein oder mehrere Sensoren und/oder Bus-Verbindungen 23 defekt sind und ausgetauscht werden müssen.

Nach einem Austausch der defekten Sensoren 14 und/oder Bus-Verbindungen 23 testet das Sensormodul 16 erneut, ob die Sensoren 14 und/oder die Bus-Verbindungen 23 nun funktionsfähig sind oder nicht.

Erst, wenn alle an dem Sensormodul 16 angeschlossenen Komponenten wieder funktionsfähig sind, schaltet das Sensormodul 16 in den Betriebsmodus 108.

Ist das Sensormodul 16 als Punktsensormodul ausgebildet, weist es zusätzlich einen Überbrückungszustand auf, in dem es als Bus-Überbrückung dient und die Punktsensoren überwacht und deren Sensorsignale auswertet.

Wie in der Figur 19 dargestellt ist, weist auch das Zentralgerät 18 einen Konfigurationsmodus 92 auf.

In diesem Zustand kommuniziert das Zentralgerät 18 mit dem Sensor 14, dem Sensormodul 16, dem Relaismodul 44, und dem Löschgerät 46 und ermittelt deren Positionen im System 8, genauer gesagt in den Schaltfeldern 48 und Anschlussfeldern 50 der Schaltanlage 12.

Auch immer dann, wenn eine neue Komponente in das Störlichtbogenschutzsystem 10 eingebaut wird, lässt sich das Zentralgerät 18 über sein Bedienelement 68 in den Konfigurationsmodus 92 schalten.

Ist das Störlichtbogenschutzsystem 10 fertig konfiguriert und ggf. initialisiert und liegt ein verarbeitetes Sensorsignal am Zentralgerät 18 an, wechselt das Zentralgerät 18 in den Signal-erkannt-Zustand 124.

In diesem Zustand analysiert das Zentralgerät 18 das verarbeitete Sensorsignal.

Liegt das verarbeitete Sensorsignal über eine zu geringe Dauer am Zentralgerät 18 an, dann schaltet das Zentralgerät 18 von dem Signal-erkannt-Zustand 124 automatisch wieder in den Betriebsmodus 108.

Übersteigt die Anliegedauer des verarbeiteten Sensorsignals jedoch die vordefinierte Zeitdauer, liegt also oberhalb eines (zeitlichen) Schwellenwerts, dann sendet das Zentralgerät 18 ein Auslösesignal an das Löschgerät 46 und schaltet in den Signal-gesendet-Zustand 126.

Über das Betätigen des Bedienelements 68 kann das Zentralgerät 18 wieder in den Betriebsmodus 108 überführt werden.

Liegen parallel zu den Sensorsignalen eines Stromsensors 34 und eines Lichtsensors 32 auch noch Informationen über den Zustand des Leistungsschalters 20 vor, beispielsweise, wenn dieser betätigt wurde, dann schaltet das Zentralgerät 18 in einen System-blockiert-Zustand 132. In diesem Zustand wird das Aussenden von Auslösesignalen für eine bestimmte, einstellbare Zeitdauer unterbunden. Dies ist beispielsweise bei der Wartung oder Erweiterung des Störlichtbogenschutzsystems 10 sinnvoll, damit nicht versehentlich ein Auslösesignal gesendet wird, obwohl kein Störlichtbogenereignis vorliegt.

Liegen nach der eingestellten Zeitdauer keine Sensorsignale mehr an dem Zentralgerät 18 an, dann schaltet das Zentralgerät 18, ohne ein Auslösesignal zu senden wieder in den Betriebsmodus 108. Liegen jedoch nach der Zeitdauer weiterhin Sensorsignale an dem Zentralgerät 18 an, schaltet das Zentralgerät 18 in den Signal-erkannt-Zustand 124 und durchläuft das zuvor beschrieben Verfahren.

Nach Ablauf einer vordefinierten Zeit, insbesondere zyklisch nach 1 h schaltet das Zentralgerät 18 von dem Betriebsmodus 108 in den Testmodus 128.

In dem Testmodus 128 testet das Zentralgerät 18 seine eigene Funktionalität und die Funktionalität aller an ihm angeschlossenen Komponenten, also den Sensormodulen 16, den Sensoren 14, dem Relaismodul 44 und den Löschgeräten 46.

Sind alle Komponenten funktionsfähig, so schaltet das Zentralgerät 18 automatisch wieder in den Betriebsmodus 108.

Erkennt das Zentralgerät 18 jedoch eine defekte Komponente und/oder eine defekte Bus-Verbindung 22, 23, schaltet das Zentralgerät 18 automatisch in den Fehlerzustand 130 und zeigt über die Anzeigeeinheit 56 oder das Anzeigeelement 54 an, dass ein oder mehrere Komponenten des Störlichtbogenschutzsystems 10 defekt ist bzw. sind.

Darüber hinaus kann das Zentralgerät 18 auch in einen Kommunikationsmodus 134 schalten oder geschaltet werden, in dem es Informationen mit einem externen Leitsystem, einem Eingabe- und Anzeigegerät wie einem Computer austauscht und oder seine Software aktualisiert. Auch ein Speichermodus 136 ist vorgesehen, während dem das Zentralgerät 18 Informationen in einem Speicher 59 abspeichert.

Das Zentralgerät 18 weist, wie das Punktsensormodul auch, einen Überbrückungszustand auf, in dem es als Bus-Überbrückung für Auslösesignale an das Löschgerät 46 und/oder die Leistungsschalter 20 dient.

Die verschiedenen Zustände und Modi, in denen sich das Löschgerät 46 befinden kann, sind in Figur 20 dargestellt.

Für die erstmalige Installation des Löschgeräts 46 kann dieses entweder manuell oder durch das Zentralgerät 18 in einen Konfigurationszustand 92 geschaltet werden. In dem Konfigurationszustand 92 übermittelt das Löschgerät 46 neben seiner Position innerhalb des Störlichtbogenschutzsystems 10, auch seine Position auf der Sammelschiene 36, genauer gesagt zwischen welchen Phasen das Löschgerät 46 installiert ist.

Zum Übermitteln der Position innerhalb des Störlichtbogenschutzsystems 10 kann beispielsweise das Bedienelement 68 für eine kurze Zeit zwischen einer und drei Sekunden betätigt werden, um ein entsprechendes Einstellungsmenü zu öffnen und die entsprechenden Informationen an das Zentralgerät 18 zu übermitteln.

Soll die Position im Sinne der Anordnung auf der Sammelschiene 36 übermittelt werden, kann das Bedienelement 68 beispielsweise über einen längeren Zeitraum zwischen fünf und zehn Sekunden betätigt werden, sodass sich ein entsprechendes zweites Einstellungsmenü öffnet und die Position eingegeben werden kann.

Ähnlich wie das Zentralgerät 18 auch, verfügt das Löschgerät 46 ebenfalls über einen Testmodus 128, in den es automatisch nach einer vordefinierten Zeitdauer schaltet.

Wurde die Funktionalitätsprüfung erfolgreich abgeschlossen, wechselt das Löschgerät 46 automatisch in den Betriebsmodus 108 zurück.

Wurde ein Fehler in dem Testmodus 128 detektiert, wechselt das Löschgerät 46 in einen Fehlerzustand 130 und kann durch das Betätigen des Bedienelements 68 erneut in den Testmodus 128 geschaltet werden.

Hat das Löschgerät 46 ein Auslösesignal von dem Zentralgerät 18 empfangen, schaltet es automatisch in einen Signal-empfangen-Zustand 126 und löst entweder einen Kurzschluss aus bzw. unterbricht die Stromversorgung der Schaltanlage 12.

Anschließend wechselt es automatisch in einen Defektzustand 138, welcher irreversibel ist. Das bedeutet, dass das Löschgerät 46 immer dann ausgetauscht werden muss, wenn es ein Auslösesignal empfangen hat und ausgelöst hat. Dass sich das Löschgerät 46 im irreversiblen Defektzustand 138 befindet, kann einerseits an der Anzeigeeinheit 56 und andererseits auf dem Anzeigeelement 54 am Löschgerät 46 angezeigt werden.

Grundsätzlich erfolgt der Wechsel von einem Zustand/Modus in einen anderen Zustand/Modus bei allen Komponenten immer automatisch. Nur wenn von einem Fehlerzustand 130 in einen Betriebsmodus 108 oder von einem Signal-gesendet-Zustand 126 in einen Betriebsmodus 108 geschaltet werden soll, ist das manuelle Betätigen des Bedienelements 68 der jeweiligen Komponente notwendig.

## Patentansprüche

1. Störlichtbogenschutzsystem (10) für eine Schaltanlage (12), wobei das Störlichtbogenschutzsystem (10) einen Sensor (14), ein Sensormodul (16) und ein Zentralgerät (18) aufweist, wobei der Sensor (14) dazu eingerichtet ist, einen störlichtbogenrelevanten Parameter zu erfassen und ein Sensorsignal zu erzeugen und an das Sensormodul (16) weiterzuleiten, wobei das Sensormodul (16) dazu eingerichtet ist, das Sensorsignal zu empfangen und zu verarbeiten, um ein verarbeitetes Sensorsignal zu erhalten, und wobei das Sensormodul (16) ferner dazu eingerichtet ist, das verarbeitete Sensorsignal an das Zentralgerät (18) weiterzuleiten, das dazu eingerichtet ist, das verarbeitete Sensorsignal auszuwerten,
wobei der Sensor (14) mit dem Sensormodul über eine Bus-Verbindung (22) informationsaustauschend verbunden ist, und
wobei das Sensormodul (16) mit dem Zentralgerät (18) über eine Bus-Verbindung (22) informationsaustauschend verbunden ist.

2. Störlichtbogenschutzsystem (10) nach Anspruch 1, **dadurch gekennzeichnet, dass** das Störlichtbogenschutzsystem (10) mindestens ein Löschgerät (46) aufweist, das dazu eingerichtet ist, einen Störlichtbogen zu löschen, insbesondere wobei das mindestens eine Löschgerät (46) über eine Bus-Verbindung (22) informationsaustauschend mit dem Zentralgerät (18) verbunden ist, wobei das Zentralgerät (18) dazu eingerichtet ist, mindestens ein Auslösesignal über die Bus-Verbindung (22) an das mindestens eine Löschgerät (46) zu senden.

3. Störlichtbogenschutzsystem (10) nach Anspruch 2, **dadurch gekennzeichnet, dass** das Störlichtbogenschutzsystem (10) mindestens zwei Löschgeräte (46) aufweist, die vom Zentralgerät (18) ansteuerbar sind.

4. Störlichtbogenschutzsystem (10) nach einem der vorhergehenden Ansprüche, **dadurch gekennzeichnet, dass** der Sensor (14) ein Lichtsensor (32) ist, wobei der störlichtbogenrelevante Parameter eine Lichtintensität ist, und wobei der Sensor (14) ein Punktsensor oder ein Liniensensor ist.

5. Störlichtbogenschutzsystem (10) nach einem der vorhergehenden Ansprüche, **dadurch gekennzeichnet, dass** das Störlichtbogenschutzsystem (10) mehrere Sensoren (32) aufweist, die über eine Bus-Verbindung (22) in Reihe geschaltet sind, wobei maximal ein Lichtsensor (32) über eine Bus-Verbindung (22) direkt mit einem Lichtsensormodul (38) verbunden ist, und/oder dass das Störlichtbogenschutzsystem (10) mehrere Sensormodule (16) aufweist, die über eine Bus-Verbindung (22) in Reihe geschaltet sind.

6. Störlichtbogenschutzsystem (10) nach einem der vorhergehenden Ansprüche, **dadurch gekennzeichnet, dass** das Zentralgerät (18) einen Spannungsanschluss (78) aufweist, über den das Zentralgerät (18) mit Spannung versorgt wird, wobei das Zentralgerät (18) zudem dazu eingerichtet ist, das Sensormodul (16) und den Sensor (14) über die Bus-Verbindung (22) mit Spannung zu versorgen.

7. Störlichtbogenschutzsystem (10) nach einem der vorhergehenden Ansprüche, **dadurch gekennzeichnet, dass** ein Speicher (59) vorgesehen ist, der dazu eingerichtet ist, systemrelevante Informationen, insbesondere Sensorsignale und/oder Auslösesignale, zu speichern, und/oder dass eine Anzeigeeinheit (56) vorgesehen ist, die dazu eingerichtet ist, systemrelevante Informationen auszugeben.

8. Störlichtbogenschutzsystem (10) nach einem der vorhergehenden Ansprüche, **dadurch gekennzeichnet, dass** das Störlichtbogenschutzsystem (10) zumindest ein Relaismodul (44) aufweist, das mit dem Zentralgerät (18) über eine Bus-Verbindung (22) verbunden ist, wobei das Zentralgerät (18) das Relaismodul (44) ansteuert.

9. System (8) umfassend eine Schaltanlage (12) und ein Störlichtbogenschutzsystem (10) nach einem der vorhergehenden Ansprüche, **dadurch gekennzeichnet, dass** das Störlichtbogenschutzsystem (10) modular aufgebaut ist, wobei das System (8) mindestens ein Schaltfeld (48) mit einem Zentralgerät (18), einem Sensor (14) und einem Sensormodul (16) und mindestens ein Anschlussfeld (50) aufweist, wobei jedes Anschlussfeld (50) mindestens einen Sensor (14) und mindestens ein Sensormodul (16) aufweist.

10. System (8) nach Anspruch 9, **dadurch gekennzeichnet, dass** das Schaltfeld (48) und das Anschlussfeld (50) informationsaustauschend miteinander verbunden sind, insbesondere ist ein Sensormodul (16) des Schaltfelds (48) mit einem Sensormodul (16) des Anschlussfelds (50) über eine Bus-Verbindung (22) informationsaustauschend verbunden.

11. System (8) nach einem der Ansprüche 9 oder 10, **dadurch gekennzeichnet, dass** jedes Schaltfeld (48) und/oder Anschlussfeld (50) höchstens ein Lichtsensormodul (38) und/oder höchstens ein Stromsensormodul (40) aufweist.

12. System (8) nach einem der Ansprüche 9 bis 11, **dadurch gekennzeichnet, dass** das Störlichtbogenschutzsystem (10) mehrere Zentralgeräte (18) aufweist, die jeweils einem Anschlussfeld (50) und/oder einem Sammelschienenabschnitt (60) der Schaltanlage (12) zugeordnet sind, wobei jedes Zentralgerät (18) dazu eingerichtet ist, nur Sensorsignale von Sensoren (14) zu empfangen und auszuwerten, die dem Zentralgerät (18) zugeordnet sind.

13. Verfahren zum Detektieren eines Störlichtbogenereignisses mit einem Störlichtbogenschutzsystem (10), wobei das Verfahren die folgenden Schritte aufweist:
a) Detektieren mindestens eines störlichtbogenrelevanten Parameters eines potenziellen Störlichtbogenereignisses mit einem Sensor (14) und Erzeugen mindestens eines Sensorsignals;
b) Weiterleiten des mindestens einen Sensorsignals vom Sensor (14) über eine Bus-Verbindung (22) an ein Sensormodul (16),
c) Verarbeiten des mindestens einen Sensorsignals durch das Sensormodul (16), wobei ein verarbeitetes Sensorsignal erhalten wird,
d) Weiterleiten des verarbeiteten Sensorsignals vom Sensormodul (16) über eine Bus-Verbindung (22) zu einem Zentralgerät (18), und
e) Auswerten des mindestens einen verarbeiteten Sensorsignals im Zentralgerät (18), wobei mindestens ein Auslösesignal erzeugt wird, wenn ein tatsächliches Störlichtbogenereignis vorliegt.

14. Verfahren nach Anspruch 13, wobei das mindestens eine Auslösesignal über eine Bus-Verbindung (22) an ein Löschgerät (46) weitergeleitet wird, mit dem ein Störlichtbogen gelöscht wird.

15. Verfahren nach Anspruch 13 oder 14, wobei das Zentralgerät (18) zwei verschiedene Auslösesignale erzeugt, die an einen Leistungsschalter (20) und ein Löschgerät (46) weitergeleitet werden, wobei mit Hilfe des Löschgeräts (46) ein Kurzschluss erzeugt wird und ein Störlichtbogen gelöscht wird und zeitversetzt mit dem Leistungsschalter (20) eine Leistungszufuhr vollständig unterbrochen wird.
